# EUROPEAN PATENT SPECIFICATION

(11) **EP 2 473 282 B1**
(45) Date of publication and mention of the grant of the patent: **09.04.2014**
(21) Application number: 10751884.7
(22) Date of filing: 24.08.2010
(51) Int. Cl.: B01J 31/22, C08C 19/08, C08L 9/02, C08C 19/02

(54) **Ruthenium based catalysts for the metathesis of nitrile rubbers**
Rutheniumbasierte Katalysatoren zur Metathese von Nitrilgummis
Catalyseurs à base de ruthénium pour la métathèse de caoutchoucs au nitrile

(30) Priority: 31.08.2009 EP 09169066
(43) Date of publication of application: 11.07.2012
(73) Proprietor: LANXESS Deutschland GmbH, 50569 Köln (DE)
(72) Inventor: ONG, Christopher, Orange Texas 77632 (US); MÜLLER, Julia, Maria, 5133 Gilgenberg (AT)
(86) International application number: PCT/EP2010/062296
(87) International publication number: WO 2011/023674

(56) References cited:
- EP-A1- 2 030 988
- EP-A2- 1 826 220
- EP-A2- 1 894 946
- WO-A1-2008/034552
- US-A1- 2005 049 417

## Description

The present invention relates to a process for the metathesis of nitrile rubbers in the presence of a specific catalyst for the metathetic degradation of nitrile rubber. The present invention further relates to specific novel metathesis catalysts.

The term nitrile rubber, also referred to as "NBR" for short, refers to rubbers which are copolymers or terpolymers of at least one α, β-unsaturated nitrile, at least one conjugated diene and, if desired, one or more further copolymerizable monomers.

Hydrogenated nitrile rubber, also referred to as "HNBR" for short, is produced by hydrogenation of nitrile rubber. Accordingly, the C=C double bonds of the copolymerized diene units have been completely or partly hydrogenated in HNBR. The degree of hydrogenation of the copolymerized diene units is usually in the range from 50 to 100%.

Hydrogenated nitrile rubber is a specialty rubber which has very good heat resistance, an excellent resistance to ozone and chemicals and also an excellent oil resistance.

The abovementioned physical and chemical properties of HNBR are associated with very good mechanical properties, in particular a high abrasion resistance. For this reason, HNBR has found wide use in a variety of applications. HNBR is used, for example, for seals, hoses, belts and clamping elements in the automobile sector, also for stators, oil well seals and valve seals in the field of oil extraction and also for numerous parts in the aircraft industry, the electronics industry, mechanical engineering and shipbuilding.

Commercially available HNBR grades usually have a Mooney viscosity (ML 1+4 at 100°C) in the range from 39 to 130, which corresponds to a weight average molecular weight M_{w} (method of determination: gel permeation chromatography (GPC) against polystyrene equivalents) in the range from about 150 000 to 500 000. The polydispersity index PDI (PDI = M_{w}/Mₙ, where M_{w} is the weight average molecular weight and Mₙ is the number average molecular weight), which gives information about the width of the molecular weight distribution, measured here between 2 and 5. The residual double bond content is usually in the range from 1 to 18% (determined by IR spectroscopy).

The processability of HNBR is subject to severe restrictions as a result of the relatively high Mooney viscosity. For many applications, it would be desirable to have an HNBR grade which has a lower molecular weight and thus a lower Mooney viscosity. This would decisively improve the processability.

Numerous attempts have been made in the past to shorten the chain length of HNBR by degradation. For example, the molecular weight can be decreased by thermomechanical treatment (mastication), e.g. on a roll mill or in a screw apparatus (EP-A-0 419 952). However, this thermomechanical degradation has the disadvantage that functional groups such as hydroxyl, keto, carboxyl and ester groups, are incorporated into the molecule as a result of partial oxidation and, in addition, the microstructure of the polymer is substantially altered.

The preparation of HNBR having low molar masses corresponding to a Mooney viscosity (ML 1+4 at 100°C) in the range below 55 or a number average molecular weight of about Mₙ < 200 000 g/mol was for a long time not possible by means of established production processes since, firstly, a steep increase in the Mooney viscosity occurs in the hydrogenation of NBR and, secondly, the molar mass of the NBR feedstock used for the hydrogenation cannot be reduced at will since otherwise the work-up can no longer be carried out in the industrial plants available because the product is too sticky. The lowest Mooney viscosity of an NBR feedstock which can be processed without difficulties in an established industrial plant is about 30 Mooney units (ML 1+4 at 100°C). The Mooney viscosity of the hydrogenated nitrile rubber obtained using such an NBR feedstock is in the order of 55 Mooney units (ML 1+4 at 100°C).

In the more recent prior art, this problem is solved by reducing the molecular weight of the nitrile rubber prior to hydrogenation by degradation to a Mooney viscosity (ML 1+4 at 100°C) of less than 30 Mooney units or a number average molecular weight of Mₙ < 70 000 g/mol. The decrease in the molecular weight is achieved here by metathesis in which low molecular weight 1-olefins are usually added. The metathesis reaction is advantageously carried out in the same solvent as the hydrogenation reaction (in situ) so that the degraded NBR feedstock does not have to be isolated from the solvent after the degradation reaction is complete before it is subjected to the subsequent hydrogenation. Metathesis catalysts which have a tolerance towards polar groups, in particular towards nitrile groups, are used for catalysing the metathetic degradation reaction.

Metathesis catalysts are known, inter alia, from WO-A-96/04289 and WO-A-97/06185. They have the following in-principle structure: 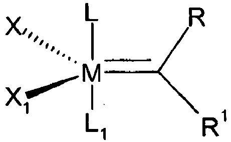 where M is osmium or ruthenium, R and R₁ are organic radicals having a wide range of structural variation, X and X₁ are anionic ligands and L and L₁ are uncharged electron donors. The customary term "anionic ligands" is used in the literature regarding such metathesis catalysts to describe ligands which are always negatively charged with a closed electron shell when regarded separately from the metal centre. Such catalysts are suitable for ring-closing metatheses (RCM), cross-metatheses (CM) and ring-opening metatheses (ROMP).

Furthermore, WO-A-00/71554 discloses a group of catalysts which are known in the technical field as "Grubbs (II) catalysts". Said catalysts comprise an imidazolidine-based ligand and are suitable for ring-closing metathesis (RCM), cross-metathesis (CM), reactions of acyclic olefins and ring-opening metathesis polymerization (ROMP).

Further, in WO-A1-2008/034552 a metathesis catalyst of formula (1) is disclosed 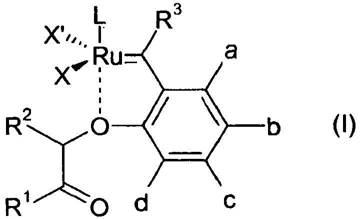 wherein
- X and X': are anionic ligands, prfereably halogen, more preferably Cl or Br;
- L: is a neutral ligand;
- a, b, c, d: are independently H, -NO₂, C₁₋₁₂ alkyl, C₁₋₁₂ alkoxy or phenyl, wherein phenyl may be substituted with a residue selected from the group C₁₋₆ alkyl and C₁₋₆ alkoxy;
- R¹: is C₁₋₁₂ alkyl, C₅₋₆ cycloalkyl, C₇₋₁₈ aralkyl, aryl;
- R²: is H, C₁₋₁₂ alkyl, C₅₋₆ cycloallcyl, C₇₋₁₈ aralkyl, aryl;
- R³: is H, C₁₋₁₂ alkyl, C₅₋₆ cycloalkyl, C₇₋₁₈ aralkyl, aryl.

The catalyst of formula (1) is used in metathesis reactions in a process wherein two compounds are reacted each having one olefinic double bond or one of the compounds comprises at least two olefinic double bonds, in ring-closing metathesis (RCM) or cross-metathesis (CM).

In US 2002/0107138 A1 transition metal based metathesis catalysts and their organometallic complexes including dendrimeric complexes are disclosed, for example a Ru complex bearing a 1,3-dimesityl-4,5-dihydroimidazole-2-ylidene and styryl ether ligand. The catalyst can be used to catalyze ring-closing metathesis (RCM), cross metathesis (CM), ring-opening polymerization metathesis (ROMP) and acyclic diene metathesis (ADMET).

However, the catalysts mentioned above are not necessarily suitable for carrying out the degradation of nitrile rubber.

WO-A-02/100905 and WO-A-02/100941 describe a process which comprises degradation of nitrile rubber starting polymers by olefin metathesis and subsequent hydrogenation. Here, a nitrile rubber is reacted in a first step in the presence of a coolefin and a specific catalyst based on osmium, ruthenium, molybdenum or tungsten complexes and hydrogenated in a second step. Hydrogenated nitrile rubbers having a weight average molecular weight (M_{w}) in the range from 30 000 to 250 000, a Mooney viscosity (ML 1+4 at 100°C) in the range from 3 to 50 and a polydispersity index PDI of less than 2.5 can be obtained by this route according to WO-A-02/100941.

Further, the metathesis of nitrile rubber can be successfully carried out using some catalysts from the group of "Grubbs (I) catalysts" (WO-A-02/100941**,** WO-A 03/002613**,** US 2004/0127647). A suitable catalyst is, for example, a ruthenium catalyst having particular substitution patterns, e.g. the catalyst bis(tricyclohexylphosphine)benzylideneruthenium dichloride shown below.

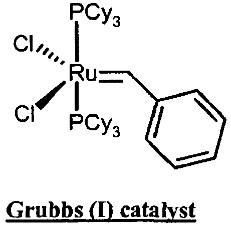

After metathesis and hydrogenation, the nitrile rubbers have a lower molecular weight and also a narrower molecular weight distribution than the hydrogenated nitrile rubbers which have hitherto been able to be prepared according to the prior art.

However, the amounts of Grubbs (I) catalyst employed for carrying out the metathesis are large. In the experiments in WO-A-03/002613, they are, for example, 307 ppm and 61 ppm of Ru based on the nitrile rubber used. The reaction times necessary are also long and the molecular weights after the degradation are still relatively high (see Example 3 of WO-A-03/002613, in which M_{w} = 180 000 g/mol and Mₙ = 71 000 g/mol).

US 2004/0127647 A1 describes blends based on low molecular weight HNBR rubbers having a bimodal or multimodal molecular weight distribution and also vulcanisates of these rubbers. To carry out the metathesis, 0.5 phr of Grubbs I catalyst, corresponding to 614 ppm of ruthenium based on the nitrile rubber used, is used according to the examples.

If a "Grubbs (II) catalyst" mentioned in WO-A-00/71554**,** e.g. 1,3-bis(2,4,6-trimethylphenyl)-2-(imidazolidinylidene) (tricyclohexylphosphine)ruthenium(phenylmethylene) dichloride, is used for the NBR metathesis, this also succeeds without use of a coolefin (US-A-2004/0132891). After the subsequent hydrogenation, which is preferably carried out in situ, the hydrogenated nitrile rubber has lower molecular weights and a narrower molecular weight distribution (PDI) than when using catalysts of the Grubbs (I) type. In terms of the molecular weight and the molecular weight distribution, the metathetic degradation thus proceeds more efficiently when using catalysts of the Grubbs II type than when using catalysts of the Grubbs I type. However, the amounts of ruthenium necessary for this efficient metathetic degradation are still relatively high. Long reaction times are also still required for carrying out the metathesis using the Grubbs II catalyst.

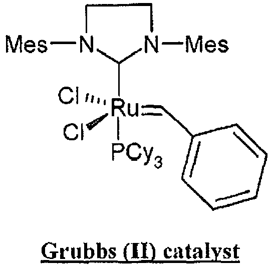

In all the abovementioned processes for the metathetic degradation of nitrile rubber, relatively large amounts of catalyst have to be used and long reaction times are required in order to produce the desired low molecular weight nitrile rubbers.

It is therefore an object of the invention to provide a catalyst which makes metathetic degradation of nitrile rubber without gelling possible and makes possible the setting of lower molecular weights of the degraded nitrile rubber at a comparable noble metal content.

It is a further object of the present invention to provide novel catalysts for the metathesis of nitrile rubbers.

These objects have been surprisingly achieved by the novel and inventive process and catalysts.

The invention provides for a process for the metathesis of nitrile rubbers in the presence of at least one catalyst of the general formula (I), 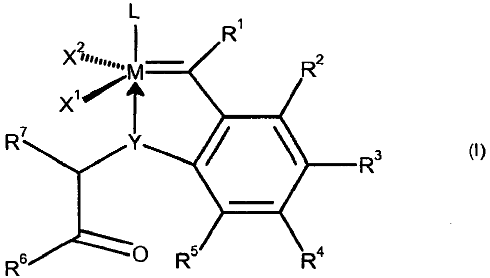 where
- M: is ruthenium or osmium, preferably ruthenium,
- Y: is oxygen (O), sulphur (S), an N radical or a P radical, preferably oxygen (O) or an N radical,
- X¹ and X²: are identical or different ligands,
- R¹: is hydrogen or an alkyl, alkenyl, alkynyl or aryl radical,
- R², R³, R⁴ and R⁵: are identical or different and are each hydrogen, organic or inorganic radicals,
- R⁶: is an alkyl, cycloalkyl, alkenyl, alkynyl, aryl, alkoxy, alkenyloxy, alkynyloxy, aryloxy, alkoxycarbonyl, alkylamino, alkylthio, arylthio, alkylsulphonyl or alkylsulphinyl radical, each of which may optionally be substituted by one or more alkyl, halogen, alkoxy, aryl or heteroaryl radicals,
- R⁷: is hydrogen or an alkyl, cycloalkyl, alkenyl, alkynyl, aryl, alkoxy, alkenyloxy, alkynyloxy, aryloxy, alkoxycarbonyl, alkylamino, alkylthio, arylthio, alkylsulphonyl or alkylsulphinyl radical, each of which may optionally be substituted by one or more alkyl, halogen, alkoxy, aryl or heteroaryl radicals; and
- L: is a ligand.

The catalysts of the general formula (I) are known in principle. Representatives of this class of compounds are the catalysts described by Arlt et al. in WO-A1-2008/034552**.** The catalysts are commercially available or can be prepared as described in the references cited.

It is surprisingly possible to carry out the metathetic degradation of nitrile rubber without gel formation using the catalysts having the structural features of the general formula (I), with such catalysts, whereby it is additionally possible to obtain lower molecular weights of the degraded nitrile rubber at a comparable noble metal content than when Grubbs II catalysts are employed.

The present invention further relates to catalysts of formulae (Ia) and (Ib) 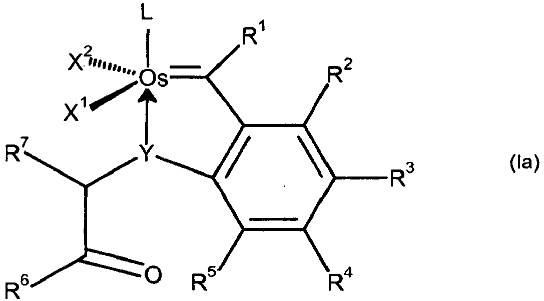 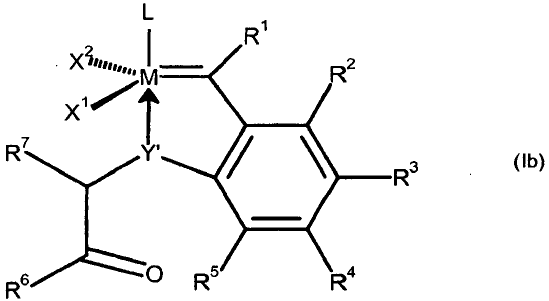 where
- M in formula (Ib): is ruthenium or osmium,
- Y in formula (Ia): is oxygen (O), sulphur (S), an N radical or a P radical,
- Y' in formula (Ib): is sulphur (S), an N radical or a P radical,
- X¹ and X²: are identical or different ligands,
- R¹: is hydrogen or an alkyl, alkenyl, alkynyl or aryl radical
- R², R³, R⁴, R⁵: are identical or different and are each hydrogen, organic or inorganic radicals,
- R⁶: is an alkyl, cycloalkyl, alkenyl, alkynyl, aryl, alkoxy, alkenyloxy, alkynyloxy, aryloxy, alkoxycarbonyl, alkylamino, alkylthio, arylthio, alkylsulphonyl or alkylsulphinyl radical, each of which may optionally be substituted by one or more alkyl, halogen, alkoxy, aryl or heteroaryl radicals,
- R⁷: is hydrogen or an alkyl, cycloalkyl, alkenyl, alkynyl, aryl, alkoxy, alkenyloxy, alkynyloxy, aryloxy, alkoxycarbonyl, alkylamino, alkylthio, arylthio, alkylsulphonyl or alkylsulphinyl radical, each of which may optionally be substituted by one or more alkyl, halogen, alkoxy, aryl or heteroaryl radicals, and
- L: is a ligand.

The term "substituted" used for the purposes of the present patent application means that a hydrogen atom on an indicated radical or atom has been replaced by one of the groups indicated in each case, with the proviso that the valency of the atom indicated is not exceeded and the substitution leads to a stable compound.

For the purposes of the present patent application and invention, all the definitions of radicals, parameters or explanations given above or below in general terms or in preferred ranges can be combined with one another in any way, i.e. including combinations of the respective ranges and preferred ranges.

In the catalysts of the general formula (I) as well as in the novel catalysts of the general formulae (Ia) and (Ib), L is a ligand, usually a ligand having an electron donor function. L can be a P(X³)₃ radical, where the radicals X³ are each, independently of one another, C₁-C₆-alkyl, C₃-C₈-cycloalkyl or aryl or L is a substituted or unsubstituted imidazolidine radical ("Im").

C₁-C₆-Alkyl is, for example, methyl, ethyl, n-propyl, isopropyl, n-butyl, sec-butyl, tert-butyl, n-pentyl, 1-methylbutyl, 2-methylbutyl, 3-methylbutyl, neopentyl, 1-ethylpropyl or n-hexyl.

C₃-C₈-Cycloalkyl encompasses cyclopropyl, cyclobutyl, cyclopentyl, cyclohexyl, cycloheptyl and cyclooctyl.

Aryl encompasses an aromatic radical having from 6 to 24 skeletal carbon atoms. Preferred monocyclic, bicyclic or tricyclic carbocyclic aromatic radicals having from 6 to 10 skeletal carbon atoms are, for example, phenyl, biphenyl, naphthyl, phenanthrenyl and anthracenyl.

The imidazolidine radical (Im) usually has a structure of the general formula (IIa) or (IIb), 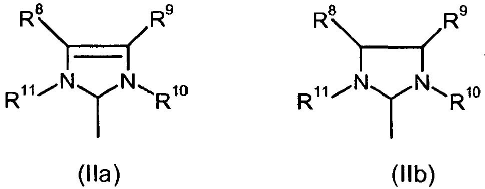 where
- R⁸, R⁹, R¹⁰, R¹¹: are identical or different and are each hydrogen, straight-chain or branched C₁-C₃₀-alkyl, preferably C₁-C₂₀-alkyl, C₃-C₂₀-cycloalkyl, preferably C₃-C₁₀-cycloalkyl, C₂-C₂₀-alkenyl, preferably C₂-C₁₀-alkenyl, C₂-C₂₀-alkynyl, preferably C₂-C₁₀-alkynyl, C₆-C₂₄-aryl, preferably C₆-C₁₄-aryl, C₁-C₂₀-carboxylate, preferably C₁-C₁₀-carboxylate, C₁-C₂₀-alkoxy, preferably C₁-C₁₀-alkoxy, C₂-C₂₀-alkenyloxy, preferably C₂-C₁₀-alkenyloxy, C₂-C₂₀-alkynyloxy, preferably C₂-C₁₀-alkynyloxy, C₆-C₂₀-aryloxy, preferably C₆-C₁₄-aryloxy, C₂-C₂₀-alkoxycarbonyl, preferably C₂-C₁₀-alkoxycarbonyl, C₁-C₂₀-alkylthio, preferably C₁-C₁₀-alkylthio, C₆-C₂₀-arylthio, preferably C₆-C₁₄-arylthio, C₁-C₂₀-alkylsulphonyl, preferably C₁-C₁₀-alkylsulphonyl, C₁-C₂₀-alkylsulphonate, preferably C₁-C₁₀-alkylsulphonate, C₆-C₂₀-arylsulphonate, preferably C₆-C₁₄-arylsulphonate, or C₁-C₂₀-alkylsulphinyl, preferably C₁-C₁₀-alkylsulphinyl.

One or more of the radicals R⁸, R⁹, R¹⁰, R¹¹ may, independently of one another, optionally be substituted by one or more substituents, preferably straight-chain or branched C₁-C₁₀-alkyl, C₃-C₈-cycloalkyl, C₁-C₁₀-alkoxy or C₆-C₂₄-aryl, where these abovementioned substituents may in turn be substituted by one or more radicals, preferably selected from the group consisting of halogen, in particular chlorine or bromine, C₁-C₅-alkyl, C₁-C₅-alkoxy and phenyl.

In a preferred embodiment of the catalysts of the general formula (I) as well as in a preferred embodiment of the novel catalysts of the general formulae (Ia) and (Ib), R⁸ and R⁹ are each, independently of one another, hydrogen, C₆-C₂₄-aryl, particularly preferably phenyl, straight-chain or branched C₁-C₁₀-alkyl, particularly preferably propyl or butyl, or together form, with inclusion of the carbon atoms to which they are bound, a cycloalkyl or aryl radical, where all the abovementioned radicals may in turn be substituted by one or more further radicals selected from the group consisting of straight-chain or branched C₁-C₁₀-alkyl, C₁-C₁₀-alkoxy, C₆-C₂₄-aryl and functional groups selected from the group consisting of hydroxy, thiol, thioether, ketone, aldehyde, ester, ether, amine, imine, amide, nitro, carboxyl, disulphide, carbonate, isocyanate, carbodiimide, carboalkoxy, carbamate and halogen.

In a preferred embodiment of the catalysts of the general formula (I) as well as in a preferred embodiment of the novel catalysts of the general formulae (Ia) and (Ib), the radicals R¹⁰ and R¹¹ are identical or different and are each straight-chain or branched C₁-C₁₀-alkyl, particularly preferably i-propyl or neopentyl, C₃-C₁₀-cycloalkyl, preferably adamantyl, C₆-C₂₄-aryl, particularly preferably phenyl, C₁-C₁₀-alkylsulphonate, particularly preferably methanesulphonate, C₆-C₁₀-arylsulphonate, particularly preferably p-toluenesulphonate.

These radicals R¹⁰ and R¹¹ which are mentioned above as being preferred may optionally be substituted by one or more further radicals selected from the group consisting of straight-chain or branched C₁-C₅-alkyl, in particular methyl, C₁-C₅-alkoxy, aryl and functional groups selected from the group consisting of hydroxy, thiol, thioether, ketone, aldehyde, ester, ether, amine, imine, amide, nitro, carboxyl, disulphide, carbonate, isocyanate, carbodiimide, carboalkoxy, carbamate and halogen.

In particular, the radicals R¹⁰ and R¹¹ are identical or different and are each i-propyl, neopentyl, adamantyl or mesityl.

Particularly preferred imidazolidine radicals (Im) have the structures (IIIa-f), where Mes is in each caes a 2,4,6-trimethylphenyl radical.

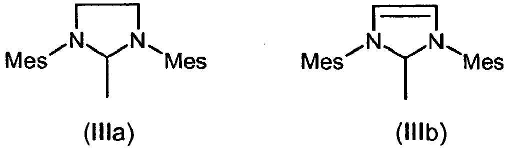

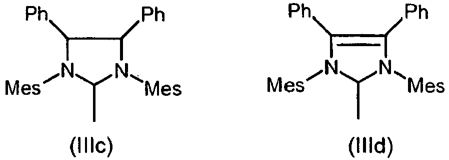

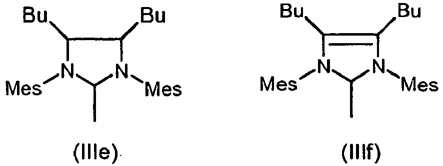

In the catalysts of the general formula (I) as well as in the novel catalysts of the general formulae (Ia) and (Ib), **X¹ and X²** are identical or different ligands and can be, for example, hydrogen, halogen, pseudohalogen, straight-chain or branched C₁-C₃₀-alkyl, C₆-C₂₄-aryl, C₁-C₂₀-alkoxy, C₆-C₂₄-aryloxy, C₃-C₂₀-alkyldiketonate, C₆-C₂₄-aryldiketonate, C₁-C₂₀-carboxylate, C₁-C₂₀-alkylsulphonate, C₆-C₂₄-arylsulphonate, C₁-C₂₀-alkylthiol, C₆-C₂₄-arylthiol, C₁-C₂₀-alkylsulphonyl or C₁-C₂₀-alkylsulphinyl.

The abovementioned radicals X¹ and X² can also be substituted by one or more further radicals, for example by halogen, preferably fluorine, C₁-C₁₀-alkyl, C₁-C₁₀-alkoxy or C₆-C₂₄-aryl radicals, where the latter radicals may optionally also in turn be substituted by one or more substituents selected from the group consisting of halogen, preferably fluorine, C₁-C₅-alkyl, C₁-C₅-alkoxy and phenyl.

In a preferred embodiment, X¹ and X² are identical or different and are each halogen, in particular fluorine, chlorine or bromine, benzoate, C₁-C₅-carboxylate, C₁-C₅-alkyl, phenoxy, C₁-C₅-alkoxy, C₁-C₅-alkylthiol, C₆-C₂₄-arylthiol, C₆-C₂₄-aryl or C₁-C₅-alkylsulphonate.

In a particularly preferred embodiment, X¹ and X² are identical and are each halogen, in particular chlorine, CF₃COO, CH₃COO, CFH₂COO, (CH₃)₃CO, (CF₃)₂(CH₃)CO, (CF₃)(CH₃)₂CO, PhO (phenoxy), MeO (methoxy), EtO (ethoxy), tosylate (p-CH₃-C₆H₄-SO₃), mesylate (2,4,6-trimethylphenyl) or CF₃SO₃ (trifluoromethanesulphonate).

In the general formula (I) as well as in the general formulae (Ia) and (Ib), the radicals R⁶ and R⁷ are an alkyl, cycloalkyl, alkenyl, alkynyl, aryl, alkoxy, alkenyloxy, alkynyloxy, aryloxy, alkoxycarbonyl, alkylamino, alkylthio, arylthio, alkylsulphonyl or alkylsulphinyl radical, each of which may optionally be substituted by one or more alkyl, halogen, alkoxy, aryl or heteroaryl radicals.

The radicals R⁶ and R⁷ are usually a C₁-C₃₀-alkyl, C₃-C₂₀-cycloalkyl, C₂-C₂₀-alkenyl, C₂-C₂₀-alkynyl, C₆-C₂₄-aryl, C₁-C₂₀-alkoxy, C₂-C₂₀₋alkenyloxy, C₁-C₂₀-alkynyloxy, C₆-C₂₄-aryloxy, C₂-C₂₀-alkoxycarbonyl, C₁-C₂₀-alkylamino, C₁-C₂₀-alkylthio, C₆-C₂₄-arylthio, C₁-C₂₀-alkylsulphonyl or C₁-C₂₀-alkylsulphinyl radical, each of which may optionally be substituted by one or more alkyl, alkoxy, aryl or heteroaryl radicals.

The radical R⁷ can also be hydrogen.

R⁶ and R⁷ are preferably a C₃-C₂₀-cycloalkyl radical, a C₆-C₂₄-aryl radical or a straight-chain or branched C₁-C₃₀-alkyl radical, with the latter optionally being able to be interrupted by one or more double or triple bonds or one or more heteroatoms, preferably oxygen or nitrogen.

The C₃-C₂₀-cycloalkyl radical encompasses, for example, cyclopropyl, cyclobutyl, cyclopentyl, cyclohexyl, cycloheptyl and cyclooctyl.

The C₁-C₁₂-alkyl radical can be, for example, methyl, ethyl, n-propyl, isopropyl, n-butyl, sec-butyl, tert-butyl, n-pentyl, 1-methylbutyl, 2-methylbutyl, 3-methylbutyl, neopentyl, 1-ethylpropyl, n-hexyl, n-heptyl, n-octyl, n-decyl or n-dodecyl. In particular, R¹ is methyl or isopropyl.

The C₆-C₂₄-aryl radical is an aromatic radical having from 6 to 24 skeletal carbon atoms. As particularly preferred monocyclic, bicyclic or tricyclic carbocyclic aromatic radicals having from 6 to 10 skeletal carbon atoms, mention may be made by way of example of phenyl, biphenyl, naphthyl, phenanthrenyl or anthracenyl.

In the general formula (I) as well as in the general formulae (Ia) and (Ib), the radicals R², R³, R⁴ and R⁵ are identical or different and can be hydrogen, organic or inorganic radicals.

In a preferred embodiment, R², R³, R⁴, R⁵ are identical or different and are each hydrogen, halogen, nitro, CF₃, alkyl, cycloalkyl, alkenyl, alkynyl, aryl, alkoxy, alkenyloxy, alkynyloxy, aryloxy, alkoxycarbonyl, alkylamino, alkylthio, arylthio, alkylsulphonyl or alkylsulphinyl, each of which may optionally be substituted by one or more alkyl, alkoxy, halogen, aryl or heteroaryl radicals.

R², R³, R⁴, R⁵ are usually identical or different and are each hydrogen, halogen, preferably chlorine or bromine, nitro, CF₃, C₁-C₃₀-alkyl, C₃-C₂₀-cycloalkyl, C₂-C₂₀-alkenyl, C₂-C₂₀-alkynyl, C₆-C₂₄-aryl, C₁-C₂₀-alkoxy, C₂-C₂₀-alkenyloxy, C₂-C₂₀-alkynyloxy, C₆-C₂₄-aryloxy, C₂-C₂₀-alkoxycarbonyl, C₁-C₂₀-alkylamino, C₁-C₂₀-alkylthio, C₆-C₂₄-arylthio, C₁-C₂₀-alkylsulphonyl or C₁-C₂₀-alkylsulphinyl, each of which may optionally be substituted by one or more C₁-C₃₀-alkyl, C₁-C₂₀-alkoxy, halogen, C₆-C₂₄-aryl or heteroaryl radicals.

In a particularly useful embodiment, R², R³, R⁴, R⁵ are identical or different and are each nitro, a straight-chain or branched C₁-C₃₀-alkyl or C₆-C₂₀-cycloalkyl radical, a straight-chain or branched C₁-C₂₀-alkoxy radical or a C₆-C₂₄-aryl radical, preferably phenyl or naphthyl. The C₁-C₃₀-alkyl radicals and C₁-C₂₀-alkoxy radicals may optionally be interrupted by one or more double or triple bonds or one or more heteroatoms, preferably oxygen or nitrogen.

Furthermore, two or more of the radicals R², R³, R⁴ or R⁵ can be bridged via aliphatic or aromatic structures. For example, R³ and R⁴ can, with inclusion of the carbon atoms to which they are bound in the phenyl ring of the formula (I), form a fused-on phenyl ring so that overall a naphthyl structure results.

In the general formula (I) as well as in the general formulae (Ia) and (Ib), R¹ is hydrogen or an alkyl, alkenyl, alkynyl or aryl radical. R¹ is preferably hydrogen or a C₁-C₃₀-alkyl radical, a C₂-C₂₀-alkenyl radical, a C₂-C₂₀-alkynyl radical or a C₆-C₃₄-aryl radical. R¹ is particularly preferably hydrogen.

Particularly suitable catalysts for use in the process according to the invention are catalysts of the general formula (IV) 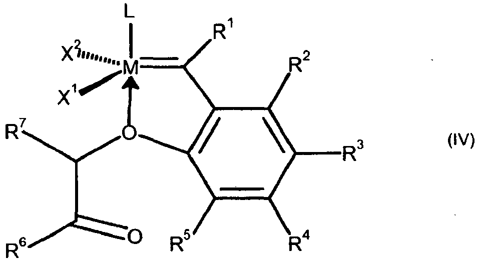 where
M, L, X¹, X², R¹, R², R³, R⁴, R⁵, R⁶ and R⁷ have the meanings given for the general formula (I).

Some of the catalysts of formula (I) are known in principle, for example from WO 2008/034552 A1 (Arlt et al.)**,** and can be obtained by preparative methods or in analogy to the preparative methods indicated there.

Particular preference is given to catalysts of the general formula (IV) in which
- M: is ruthenium,
- X¹ and X²: are both halogen, in particular, both chlorine,
- R¹: is hydrogen,
- R², R³, R⁴, R⁵: have the meanings given for the general formula (I),
- R⁶, R⁷: has the meanings given for the general formula (I) and
- L: has the meanings given for the general formula (I).

Very particular preference is given to catalysts of the general formula (IV) in which
- M: is ruthenium,
- X¹ and X²: are both chlorine,
- R¹: is hydrogen,
- R², R³, R⁴, R⁵: are all hydrogen,
- R⁶: is methyl
- R⁷: is methyl and
- L: is a substituted or unsubstituted imidazolidine radical of the formula (IIa) or (IIb), 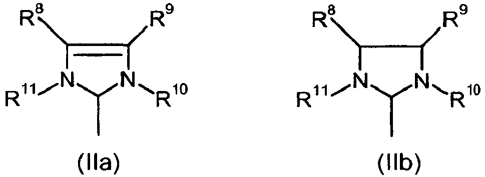
where
- R⁸, R⁹, R¹⁰, R¹¹: are identical or different and are each hydrogen, straight-chain or branched C₁-C₃₀-alkyl, C₃-C₂₀-cycloalkyl, C₂-C₂₀-alkenyl, C₂-C₂₀-alkynyl, C₆-C₂₄-aryl, C₁-C₂₀-carboxylate, C₁-C₂₀-alkoxy, C₂-C₂₀-alkenyloxy, C₂-C₂₀-alkynyloxy, C₆-C₂₄-aryloxy, C₂-C₂₀-alkoxycarbonyl, C₁-C₂₀-alkylthio, C₆-C₂₄-arylthio, C₁-C₂₀-alkylsulphonyl, C₁-C₂₀-alkylsulphonate, C₆-C₂₄-arylsulphonate or C₁-C₂₀-alkylsulphinyl.

A very particularly preferred catalyst which comes under the general structural formula (IV) is that of the formula (V) 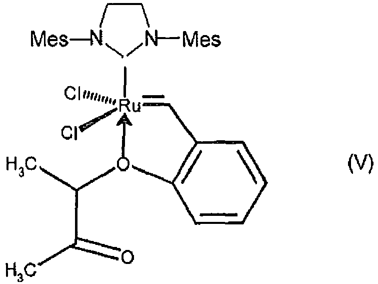 which is also referred to herein as "Arlt catalyst".

Further suitable catalysts which come under the general structural formula (IV) are those of the formulae (VI), (VII), (VIII), (IX), (X), (XI), (XII) and (XIII), where Mes is in each case a 2,4,6-trimethylphenyl radical.

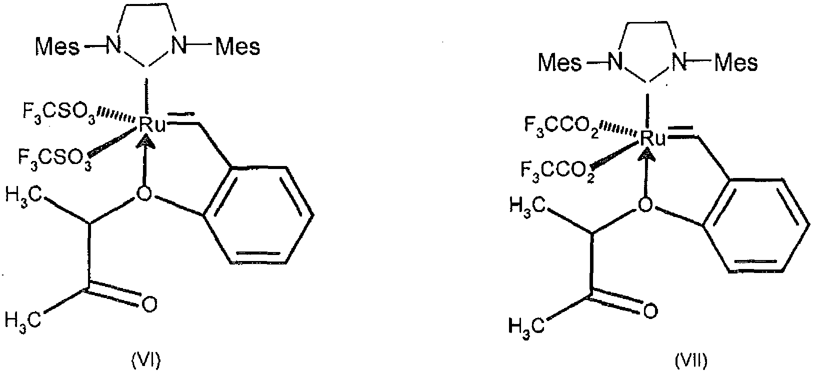

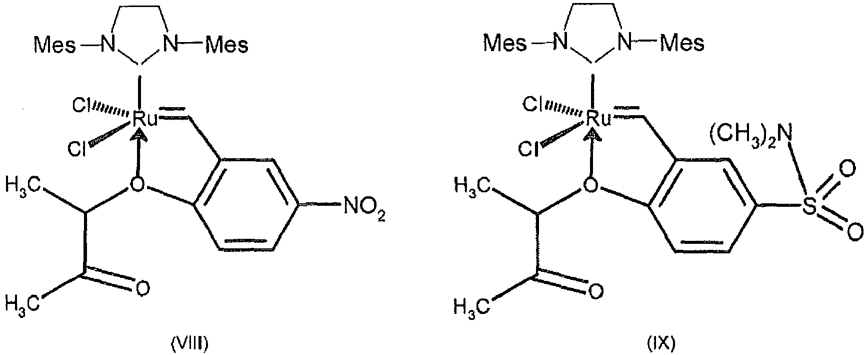

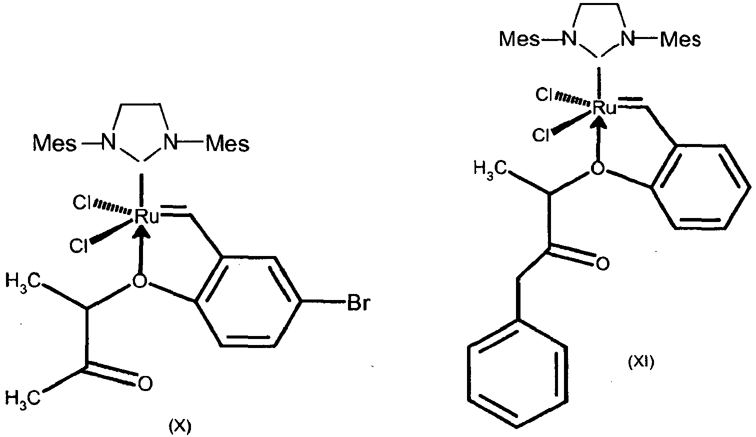

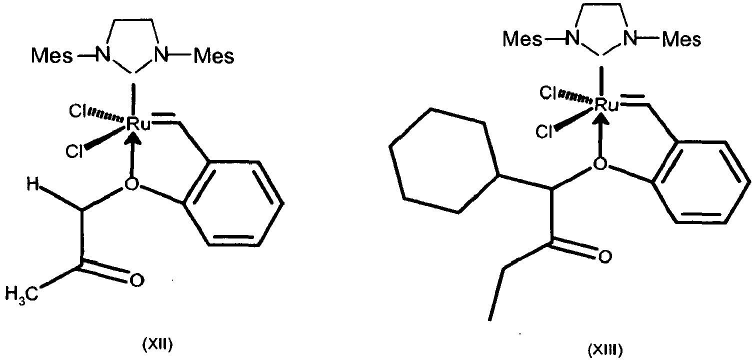

Preferred novel catalysts of the general formulae (Ia) and (Ib) are catalysts of the following structure (Iaa): 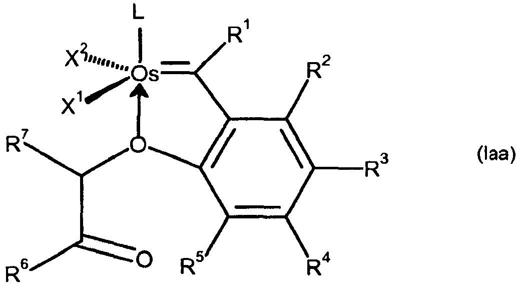 where
- X¹ and X²: are identical or different ligands,
- R¹: is hydrogen or an alkyl, alkenyl, alkynyl or aryl radical
- R², R³, R⁴, R⁵: are identical or different and are each hydrogen, organic or inorganic radicals,
- R⁶: is an alkyl, cycloalkyl, alkenyl, alkynyl, aryl, alkoxy, alkenyloxy, alkynyloxy, aryloxy, alkoxycarbonyl, alkylamino, alkylthio, arylthio, alkylsulphonyl or alkylsulphinyl radical, each of which may optionally be substituted by one or more alkyl, halogen, alkoxy, aryl or heteroaryl radicals,
- R⁷: is hydrogen or an alkyl, cycloalkyl, alkenyl, alkynyl, aryl, alkoxy, alkenyloxy, alkynyloxy, aryloxy, alkoxycarbonyl, alkylamino, alkylthio, arylthio, alkylsulphonyl or alkylsulphinyl radical, each of which may optionally be substituted by one or more alkyl, halogen, alkoxy, aryl or heteroaryl radicals, and
- L: is a ligand.

The catalysts of formulae (Ia) and (Ib), especially the catalysts of formula (Iaa) can be obtained by in analogy to the preparative methods indicated for example in WO 2008/034552 A1 (Arlt et al.)**.**

In an alternative embodiment, it is also possible to use dendritic catalysts of the general formula (XIV) in the process of the present invention, 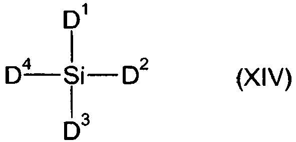
where D¹, D², D³ and D⁴ each have a structure of the general formula (XV) which is bound via the methylene group to the silicon of the formula (XIV), 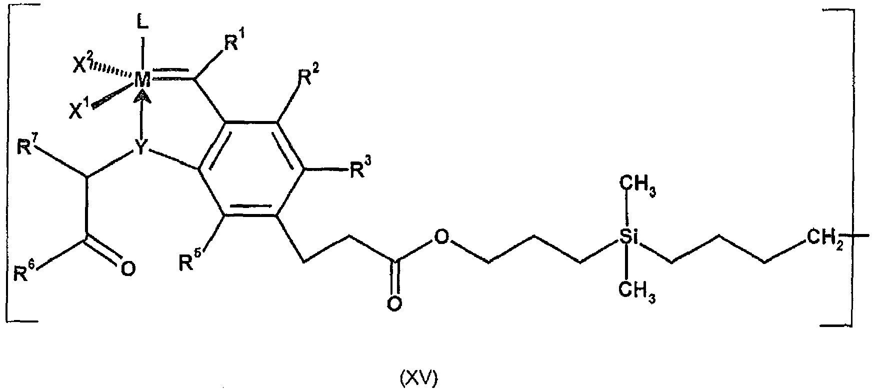
where
- M, L, X¹, X², R¹, R², R³, R⁵, R⁶ and R⁷: have the meanings given for the general formula (I) or can have the meanings given for all the abovementioned preferred or particularly preferred embodiments.

Such catalysts of the similar formula (XV) are known from US 2002/0107138 A1 and can be prepared according to the information given there.

All the abovementioned catalysts of the formulae (I), (Ia), (ib), (IV)-(XIII), (XIV), (Iaa) and (XV) can either be used as such for the NBR metathesis or can be applied to and immobilized on a solid support. As solid phases or supports, it is possible to use materials which firstly are inert towards the reaction mixture of the metathesis and secondly do not impair the activity of the catalyst. It is possible to use, for example, metals, glass, polymers, ceramic, organic polymer spheres or inorganic sol-gels for immobilizing the catalyst.
The catalysts of all the abovementioned general and specific formulae (I), (Ia), (ib), (IV)-(XIII), (XIV), (Iaa) and (XV) are highly suitable for the metathetic degradation of nitrile, rubber.

In the process according to the invention, a nitrile rubber is subjected to a metathesis reaction in the presence of a catalyst of the general formula (I) or in the presence of a catalyst of one of the formulae (Ia) or (Ib).

The weight amount of the catalyst used according to the invention for the metathesis depends on the nature and the catalytic activity of the specific catalyst. The amount of catalyst used is from 1 to 1000 ppm of noble metal, preferably from 5 to 500 ppm, in particular from 5 to 250 ppm, based on the nitrile rubber used. It has surprisingly been found by the inventors of the present invention that with the same amount of the catalyst of formula (I) or of the formulae (Ia) or (Ib) according to the present invention NBR with lower molecular weight is obtained compared with the use of a catalyst known in the art as useful for the metathesis of nitrile rubbers, for example the Grubb's II catalyst.

The NBR metathesis can be carried out without a coolefin or in the presence of a coolefin. This is preferably a straight-chain or branched C₂-C₁₆-olefin. Suitable coolefins are, for example, ethylene, propylene, isobutene, styrene, 1-hexene and 1-octene. Preference is given to using 1-hexene or 1-octene. If the coolefin is liquid (as in the case of, for example, 1-hexene), the amount of coolefin is preferably in the range 0.2-20% by weight based on the nitrile rubber used. If the coolefin is a gas, as in the case of, for example, ethylene, the amount of coolefin is selected so that a pressure in the range 1 × 10⁵ Pa - 1 × 10⁷ Pa, preferably a pressure in the range from 5.2 × 10⁵ Pa to 4 × 10⁶ Pa, is established in the reaction vessel at room temperature.

The metathesis reaction is carried out in a suitable solvent, preferably a solvent which does not deactivate the catalyst used and also does not adversely affect the reaction in any other way. Preferred solvents are organic solvents and include but are not restricted to dichloromethane, benzene, toluene, methyl ethyl ketone, acetone, tetrahydrofuran, tetrahydropyran, dioxane and cyclohexane. The particularly preferred solvent is chlorobenzene. In some cases, when the coolefin itself can function as solvent, e.g. in the case of 1-hexene, the addition of a further additional solvent can also be omitted.

The concentration of the nitrile rubber used in the reaction mixture of the metathesis is not critical, but care naturally has to be taken to ensure that the reaction is not adversely affected by an excessively high viscosity of the reaction mixture and the mixing problems associated therewith. The concentration of NBR in the reaction mixture is preferably in the range from 1 to 20% by weight, particularly preferably in the range from 5 to 15% by weight, based on the total reaction mixture.

The metathetic degradation is usually carried out at a temperature in the range from 10°C to 150°C, preferably in the range from 20°C to 100°C.

The reaction time depends on a number of factors, for example, on the type of NBR, the type of catalyst, the catalyst concentration used and the reaction temperature. The reaction is typically complete within three hours under normal conditions. The progress of the metathesis can be monitored by standard analytical methods, e.g. by GPC measurement or by determination of the viscosity.

As nitrile rubbers ("NBR"), it is possible to use copolymers or terpolymers which comprise repeating units of at least one conjugated diene, at least one α,β-unsaturated nitrile and, if desired, one or more further copolymerizable monomers in the metathesis reaction.

The conjugated diene can be of any nature. Preference is given to using (C₄-C₆) conjugated dienes. Particular preference is given to 1,3-butadiene, isoprene, 2,3-dimethylbutadiene, piperylene or mixtures thereof. Very particular preference is given to 1,3-butadiene and isoprene or mixtures thereof. Especial preference is given to 1,3-butadiene.

As α,β-unsaturated nitrile, it is possible to use any known α,β-unsaturated nitrile, preferably a (C₃-C₅) α,β-unsaturated nitrile such as acrylonitrile, methacrylonitrile, ethacrylonitrile or mixtures thereof. Particular preference is given to acrylonitrile.

A particularly preferred nitrile rubber is thus a copolymer of acrylonitrile and 1,3-butadiene.

Apart from the conjugated diene and the α,β-unsaturated nitrile, it is possible to use one or more further copolymerizable monomers known to those skilled in the art, e.g. α,β-unsaturated monocarboxylic or dicarboxylic acids, their esters or amides. As α,β-unsaturated monocarboxylic or dicarboxylic acids, preference is given to fumaric acid, maleic acid, acrylic acid and methacrylic acid. As esters of α,β-unsaturated carboxylic acids, preference is given to using their alkyl esters and alkoxyalkyl esters. Particularly preferred alkyl esters of α,β-unsaturated carboxylic acids are methyl acrylate, ethyl acrylate, butyl acrylate, butyl methacrylate, 2-ethylhexyl acrylate, 2-ethylhexyl methacrylate and octyl acrylate. Particularly preferred alkoxyalkyl esters of α,β-unsaturated carboxylic acids are methoxyethyl (meth)acrylate, ethoxyethyl (meth)acrylate and methoxyethyl (meth)acrylate. It is also possible to use mixtures of alkyl esters, e.g. those mentioned above, with alkoxyalkyl esters, e.g. in the form of those mentioned above.

The proportions of conjugated diene and α,β-unsaturated nitrile in the NBR polymers to be used can vary within wide ranges. The proportion of or of the sum of the conjugated dienes is usually in the range from 40 to 90% by weight, preferably in the range from 55 to 75% by weight, based on the total polymer. The proportion of or of the sum of the α,β-unsaturated nitriles is usually from 10 to 60% by weight, preferably from 25 to 45% by weight, based on the total polymer. The proportions of the monomers in each case add up to 100% by weight. The additional monomers can be present in amounts of from 0 to 40% by weight, preferably from 0.1 to 40% by weight, particularly preferably from 1 to 30% by weight, based on the total polymer. In this case, corresponding proportions of the conjugated diene or dienes and/or of the α,β-unsaturated nitrile or nitriles are replaced by the proportions of the additional monomers, with the proportions of all monomers in each case adding up to 100% by weight.

The preparation of nitrile rubbers by polymerization of the abovementioned monomers is adequately known to those skilled in the art and is comprehensively described in the polymer literature.

Nitrile rubbers which can be used for the purposes of the invention are also commercially available, e.g. as products from the product range of the trade names Perbunan^{®} and Krynac^{®} from Lanxess Deutschland GmbH.

The nitrile rubbers used for the metathesis have a Mooney viscosity (ML 1+4 at 100°C) in the range from 24 to 70, preferably from 28 to 40. This corresponds to a weight average molecular weight M_{w} in the range 200 000 - 500 000, preferably in the range 200 000 - 400 000. The nitrile rubbers used also have a polydispersity PDI = M_{w}/Mₙ, where M_{w} is the weight average molecular weight and Mₙ is the number average molecular weight, in the range 2.0 - 6.0 and preferably in the range 2.0 - 4.0.

The determination of the Mooney viscosity is carried out in accordance with ASTM standard D 1646.

The nitrile rubbers obtained by the metathesis process according to the invention have a Mooney viscosity (ML 1+4 at 100°C) in the range 1 to 30, preferably 10 to 20. This corresponds to a weight average molecular weight M_{w} in the range 10 000 - 250 000, preferably in the range 20 000-150 000. The nitrile rubbers obtained also have a polydispersity PDI = M_{w}/Mₙ, where Mₙ is the number average molecular weight, in the range 1.5 - 4.0, preferably in the range 1.7 - 3.

The metathetic degradation process according to the invention can be followed by a hydrogenation of the degraded nitrile rubbers obtained. This can be carried out in the manner known to those skilled in the art.

It is possible to carry out the hydrogenation with use of homogeneous or heterogeneous hydrogenation catalysts. It is also possible to carry out the hydrogenation in situ, i.e. in the same reaction vessel in which the metathetic degradation has previously also been carried out and without the necessity of isolating the degraded nitrile rubber. The hydrogenation catalyst is simply added to the reaction vessel.

The catalysts used are usually based on rhodium, ruthenium or titanium, but it is also possible to use platinum, iridium, palladium, rhenium, osmium, cobalt or copper either as metal or preferably in the form of metal compounds (cf., for example, US-A-3,700,637**,** DE-A-25 39 132**,** EP-A-0 134 023**,** DE-A-35 41 689**,** DE-A-35 40 918**,** EP-A-0 298 386**,** DE-A-35 29 252**,** DE-A-34 33 392**,** US-A-4,464,515 **and** US-A-4,503,196**).**

Suitable catalysts and solvents for a hydrogenation in the homogeneous phase are described below and are also known from DE-A-25 39 132 and EP-A-0 471 250. The selective hydrogenation can be achieved, for example, in the presence of a rhodium- or ruthenium-containing catalyst. It is possible to use, for example, a catalyst of the general formula

(R^{1'}ₘB)ₗ M' X'ₙ,

where M' is ruthenium or rhodium, the radicals R^{1'} are identical or different and are each a C₁-C₈-alkyl group, a C₄-C₈-cycloakyl group, a C₆-C₁₅-aryl group or a C₇-C₁₅-aralkyl group. B is phosphorus, arsenic, sulphur or a sulphoxide group S=O, X' is hydrogen or an anion, preferably halogen and particularly preferably chlorine or bromine, I is 2, 3 or 4, m is 2 or 3 and n is 1, 2 or 3, preferably 1 or 3. Preferred catalysts are tris(triphenylphosphine)rhodium(I) chloride, tris(triphenylphosphine)rhodium(III) chloride and tris(dimethyl sulphoxide)rhodium(III) chloride and also tetrakis(triphenylphosphine)rhodium hydride of the formula (C₆H₅)₃P)₄RhH and the corresponding compounds in which the triphenylphosphine has been completely or partly replaced by tricyclohexylphosphine. The catalyst can be utilized in small amounts. An amount in the range 0.01-1% by weight, preferably in the range 0.03-0.5% by weight and particularly preferably in the range 0.1-0.3% by weight, based on the weight of the polymer, is suitable.
It is usually appropriate to use the catalyst together with a cocatalyst which is a ligand of the formula R^{1'}ₘB, where R^{1'}, m and B have the meanings given above for the catalyst. Preferably, m is 3, B is phosphorus and the radicals R^{1'} can be identical or different. Preference is given to cocatalysts having trialkyl, tricycloalkyl, triaryl, triaralkyl, diaryl-monoalkyl, diaryl-monocycloalkyl, dialkyl-monoaryl, dialkyl-monocycloalkyl, dicycloalkyl-monoaryl or dicycloalkyl-monoaryl radicals.

Examples of cocatalysts may be found in, for example, US-A-4,631,315**.** A preferred cocatalyst is triphenylphosphine. The cocatalyst is preferably used in amounts in the range 0.3-5% by weight, preferably in the range 0.5-4% by weight, based on the weight of the nitrile rubber to be hydrogenated. Furthermore, the weight ratio of the rhodium-containing catalyst to the cocatalyst is preferably in the range from 1:3 to 1:55, more preferably in the range from 1:5 to 1:45. Based on 100 parts by weight of the nitrile rubber to be hydrogenated, it is appropriate to use from 0.1 to 33 parts by weight of the cocatalyst, preferably from 0.5 to 20 parts by weight and very particularly preferably from 1 to 5 parts by weight, in particular more than 2 but less than 5 parts by weight, of cocatalyst per 100 parts by weight of the nitrile rubber to be hydrogenated.

The practical implementation of this hydrogenation is adequately known to those skilled in the art from US-A-6,683,136. It is usually carried out by treating the nitrile rubber to be hydrogenated in a solvent such as toluene or monochlorobenzene with hydrogen at a temperature in the range from 100 to 150°C and a pressure in the range from 50 to 150 bar for from 2 to 10 hours.

For the purposes of the present invention, hydrogenation is a reaction of the double bonds present in the starting nitrile rubber to an extent of at least 50%, preferably 70-100%, particularly preferably 80-100%.

When heterogeneous catalysts are used, these are usually supported catalysts based on palladium which are, for example, supported on carbon, silica, calcium carbonate or barium sulphate.

After conclusion of the hydrogenation, a hydrogenated nitrile rubber having a Mooney viscosity (ML 1+4 at 100°C), measured in accordance with ASTM standard D 1646, in the range from 1 to 50, preferably from 10 to 40, is obtained. This corresponds to a weight average molecular weight M_{w} in the range 2000-400 000 g/mol, preferably in the range 20 000-200 000. The hydrogenated nitrile rubbers obtained also have a polydispersity PDI = M_{w}/Mₙ, where M_{w} is the weight average molecular weight and Mₙ is the number average molecular weight, in the range 1-5 and preferably in the range 1.5-3.

### EXAMPLES

### Metathetic degradation of nitrile rubber in the presence of various Ru catalysts

In the following examples, it is shown that, in each case at the same amount of ruthenium, the metathesis activity of the catalysts of the general structural formula (I) is higher than when the Grubbs II catalyst is used.

The following catalysts were used:

### "Arlt catalyst" (according to the invention):

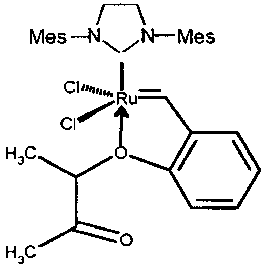

The Arlt catalyst was procured from Umicore AG & Co.

### Grubbs II catalyst (comparison):

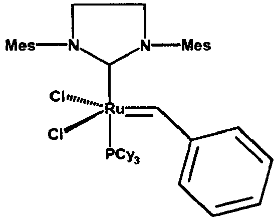

The Grubbs II catalyst was procured from Materia (Pasadena/California).

The degradation reactions described below were carried out using the nitrile rubber Perbunan^{®} NT 3429 from Lanxess Deutschland GmbH which had the following characteristic properties:

| | |
|---|---|
| Acrylonitrile content: | 34% by weight |
| Mooney viscosity (ML 1 +4 @100°C): | 27 Mooney units |
| Residual moisture content: | <0,5% by weight |
| M_{w}: | 255,000 g/mol |
| Mₙ: | 76,000 g/mol |
| PDI (M_{w}/Mₙ): | 3,36 |

In the text that follows, this nitrile rubber is referred to as NBR for short.

### General description of the metathesis reactions carried out

The metathetic degradation was in each case carried out using 500 g of chlorobenzene (hereinafter referred to as "MCB" which can be purchased from Aldrich). 75g of NBR were dissolved therein at room temperature over a period of 10 hours. 3.0 g (4 phr) of 1-hexene was in each case added to the NBR-containing solution and the mixture was stirred for 120 minutes to homogenize it.

The metathesis reactions were carried out using the amounts of starting materials indicated in the following tables at room temperature.

The Ru-containing catalysts were in each case dissolved in 20 g of MCB at room temperature. The addition of the catalyst solutions to the NBR solutions in MCB was carried out immediately after the preparation of the catalyst solutions. After the reaction times indicated below in the tables, the polymer solution was coagulated using methods standard to those in the art such as through steam coagulation or alcohol precipitation. Once the solid polymer was isolated, the polymer was thermally dried with temperatures ranging from 20 to 140°C, preferably ranging from 40 to 100°C, until the volatile material content was less than 2%, preferably less than 1%.

GPC measurements were carried out according to DIN 55672-1 version 2007.

Following characteristic properties were determined by means of GPC analysis both for the original NBR rubber (before degradation) and for the degraded nitrile rubbers:

| | |
|---|---|
| M_{w} [kg/mol]: | weight average molar mass |
| Mₙ [kg/mol]: | number average molar mass |
| PDI: | width of the molar mass distribution (M_{w}/Mₙ) |

### Example 1.1

### "Arlt catalyst" using 0.003 phr of catalyst and 4.0 phr of 1-hexene

| **NBR** | **"Arlt catalyst"** | | **1-Hexene** | | **Temperature** |
|---|---|---|---|---|---|
| Amount [g] | Amount [g] | Amount [phr] | [g] | [phr] | [°C] |
| 75 | 0.0023 | 0.003 | 3.0 | 4.0 | 23 |

| **Analytical data** | **"Arlt catalyst"** |
|---|---|
| Brookfield Viscosity (cP) | 912 |
| Mooney Viscosity* | 16,5 |
| M_{w} [kg/mol] | 195143 |
| Mₙ [kg/mol] | 66484 |
| PDI | 2.94 |

| | |
|---|---|
| *ML 1+4 @ 100 °C | |

### Example 1.2 (comparison)

### "Grubbs II catalyst" using 0.003phr of catalyst and 4.0 phr of 1-hexene

| **NBR** | **"Grubbs II catalyst"** | | **1-Hexene** | | **Temperature** |
|---|---|---|---|---|---|
| Amount [g] | Amount [g] | Amount [phr] | [g] | [phr] | [°C] |
| 75 | 0.0023 | 0.003 | 3.0 | 4.0 | 23 |

| **Analytical data** | **"Grubbs II catalyst"** |
|---|---|
| Brookfield Viscosity | 915 |
| Mooney Viscosity* | 16,8 |
| M_{w} [kg/mol] | 220324 |
| Mₙ [kg/mol] | 75000 |
| PDI | 2.94 |

| | |
|---|---|
| *ML 1+4 @ 100 °C | |

In comparison to the original Perbunan NT 3429, the decrease in the Mooney viscosity and the molecular weight properties M_{w} and Mₙ in Examples 1.1 and 1.2 shows that at an amount of catalyst of 0.003phr the activity of the "Arlt catalyst" is higher than that of the "Grubbs II catalyst".

### Example 2.1

### "Arlt catalyst" using 0.007 phr of catalyst and 4.0 phr of 1-hexene

| **NBR** | **"Arlt catalyst"** | | **1-Hexene** | | **Temperature** |
|---|---|---|---|---|---|
| Amount [g] | Amount [g] | Amount [phr] | [g] | [phr] | [°C] |
| 75 | 0.0053 | 0.007 | 3.0 | 4.0 | 23 |

| **Analytical data** | **"Arlt catalyst"** |
|---|---|
| Brookfield Viscosity | 456 |
| Mooney Viscosity* | 9,5 |
| M_{w} [kg/mol] | 144590 |
| Mₙ [kg/mol] | 57681 |
| PDI | 2.51 |

| | |
|---|---|
| *ML 1+4 @ 100 °C | |

### Example 2.2 (comparison)

### "Grubbs II catalyst" using 0.007phr of catalyst and 4.0 phr of 1-hexene

| **NBR** | **"Grubbs II catalyst"** | | **1-Hexene** | | **Temperature** |
|---|---|---|---|---|---|
| Amount [g] | Amount [g] | Amount [phr] | [g] | [phr] | [°C] |
| 75 | 0.0053 | 0.007 | 3.0 | 4.0 | 23 |

| **Analytical data** | **"Grubbs II catalyst"** |
|---|---|
| Brookfield Viscosity | 508 |
| Mooney Viscosity* | 10,9 |
| M_{w} [kg/mol] | 168364 |
| Mₙ [kg/mol] | 65028 |
| PDI | 2.59 |

| | |
|---|---|
| *ML 1+4 @ 100 °C | |

In comparison to the original Perbunan NT 3429, the decrease in the Mooney viscosity and the molecular weight properties M_{w} and Mₙ in Examples 2.1 and 2.2 shows that at an amount of catalyst of 0.007phr the activity of the "Arlt catalyst" is higher than that of the "Grubbs II catalyst".

### Example 3.1

### "Arlt catalyst" using 0.015 phr of catalyst and 4.0 phr of 1-hexene

| **NBR** | **"Arlt catalyst"** | | **1-Hexene** | | **Temperature** |
|---|---|---|---|---|---|
| Amount [g] | Amount [g] | Amount [phr] | [g] | [phr] | [°C] |
| 75 | 0.0113 | 0.015 | 3.0 | 4.0 | 23 |

| **Analytical data** | **"Arlt catalyst"** |
|---|---|
| Brookfield Viscosity | 175 |
| M_{w} [kg/mol] | 108946 |
| Mₙ [kg/mol] | 47888 |
| PDI | 2.28 |

| | |
|---|---|
| *ML 1+4 @ 100 °C | |

### Example 3.2 (comparison)

### "Grubbs II catalyst" using 0.015phr of catalyst and 4.0 phr of 1-hexene

| **NBR** | **"Grubbs II catalyst"** | | **1-Hexene** | | **Temperature** |
|---|---|---|---|---|---|
| Amount [g] | Amount [g] | Amount [phr] | [g] | [phr] | [°C] |
| 75 | 0.0113 | 0.015 | 3.0 | 4.0 | 23 |

| **Analytical data** | **"Grubbs II catalyst"** |
|---|---|
| Brookfield Viscosity | 199 |
| M_{w} [kg/mol] | 116546 |
| Mₙ [kg/mol] | 51084 |
| PDI | 2.28 |

| | |
|---|---|
| *ML 1+4 @ 100°C | |

In comparison to the original Perbunan NT 3429, the decrease in the Mooney viscosity and the molecular weight properties M_{w} and Mₙ in Examples 3.1 and 3.2 shows that at an amount of catalyst of 0.015phr the activity of the "Arlt catalyst" is significantly higher than that of the "Grubbs II catalyst".

The nitrile rubbers degraded in the examples outlined above using both the "Arlt catalyst" and "Grubbs II catalyst" were gel-free.

## Claims

1. A process for the metathesis of nitrile rubbers in the presence of at least one catalyst of the general formula (I) 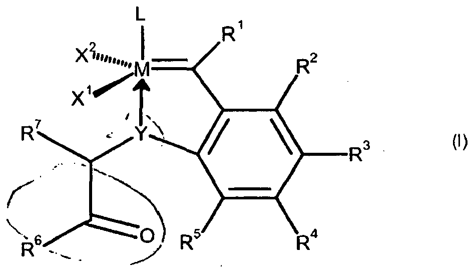 where
M is ruthenium or osmium,
Y is oxygen (O), sulphur (S), an N radical or a P radical,
X¹ and X² are identical or different ligands,
R¹ is hydrogen or an alkyl, alkenyl, alkynyl or aryl radical
R², R³, R⁴, R⁵ are identical or different and are each hydrogen, organic or inorganic radicals,
R⁶ is an alkyl, cycloalkyl, alkenyl, alkynyl, aryl, alkoxy, alkenyloxy, alkynyloxy, aryloxy, alkoxycarbonyl, alkylamino, alkylthio, arylthio, alkylsulphonyl or alkylsulphinyl radical, each of which may optionally be substituted by one or more alkyl, halogen, alkoxy, aryl or heteroaryl radicals,
R⁷ is hydrogen or an alkyl, cycloalkyl, alkenyl, alkynyl, aryl, alkoxy, alkenyloxy, alkynyloxy, aryloxy, alkoxycarbonyl, alkylamino, alkylthio, arylthio, alkylsulphonyl or alkylsulphinyl radical, each of which may optionally be substituted by one or more alkyl, halogen, alkoxy, aryl or heteroaryl radicals, and
L is a ligand.

2. Process according to Claim 1, wherein L in the general formula (I) is a P(X³)₃ radical, where the radicals X³ are each, independently of one another, C₁-C₆-alkyl, C₃-C₈-cycloalkyl or aryl or L is a substituted or unsubstituted imidazolidine radical ("Im").

3. Process according to Claim 2, wherein the imidazolidine radical (Im) has a structure of the general formula (IIa) or (IIb), 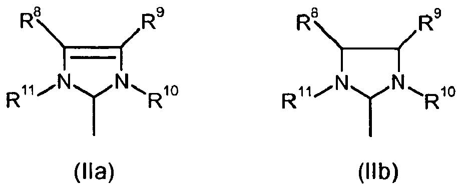 where
R⁸, R⁹, R¹⁰, R¹¹ are identical or different and are each hydrogen, straight-chain or branched C₁-C₃₀-alkyl, C₃-C₂₀-cycloalkyl, C₂-C₂₀-alkenyl, C₂-C₂₀-alkynyl, C₆-C₂₄-aryl, C₁-C₂₀-carboxylate, C₁-C₂₀-alkoxy, C₂-C₂₀-alkenyloxy, C₂-C₂₀-alkynyloxy, C₆-C₂₀-aryloxy, C₂-C₂₀-alkoxycarbonyl, C₁-C₂₀-alkylthio, C₆-C₂₀-arylthio, C₁-C₂₀-alkylsulphonyl, C₁-C₂₀-alkylsulphonate, C₆-C₂₀-arylsulphonate or C₁-C₂₀-alkylsulphinyl.

4. Process according to Claim 3, wherein the imidazolidine radical (Im) has the structure (IIIa), (IIIb), (IIIc), (IIId), (IIIe) or (IIIf), 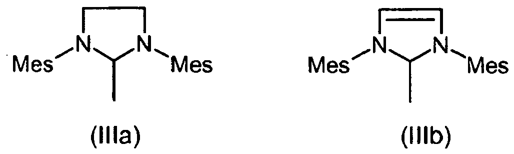 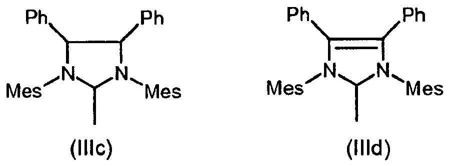 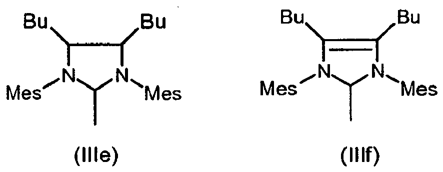
where Mes is in each case a 2,4,6-trimethylphenyl radical.

5. Process according to Claim 1, wherein the process is carried out in the presence of a catalyst of the general formula (IV) 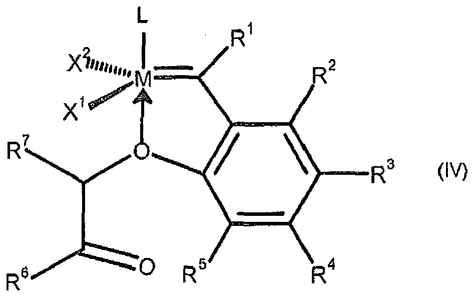 where
M, L, X¹, X², R¹, R², R³, R⁴, R⁵, R⁶, R⁷ have the meanings given for the general formula (I) in Claim 1.

6. Process according to Claim 5, wherein, in the general formula (IV),
M is ruthenium,
X¹ and X² are both chlorine,
R¹ is hydrogen,
R², R³, R⁴, R⁵ are all hydrogen,
R⁶ is methyl,
R⁷ is methyl and
L is a substituted or unsubstituted imidazolidine radical of the formula (IIa) or (IIb), 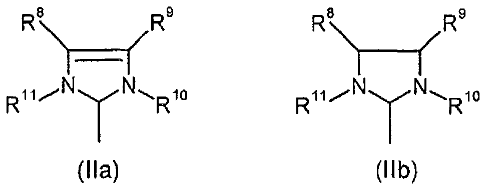
where
R⁸, R⁹, R¹⁰, R¹¹ are identical or different and are each hydrogen, straight-chain or branched C₁-C₃₀-alkyl, C₃-C₂₀-cycloalkyl, C₂-C₂₀-alkenyl, C₂-C₂₀-alkynyl, C₆-C₂₄-aryl, C₁-C₂₀-carboxylate, C₁-C₂₀-alkoxy, C₂-C₂₀-alkenyloxy, C₂-C₂₀-alkynyloxy, C₆-C₂₄-aryloxy, C₂-C₂₀-alkoxycarbonyl, C₁-C₂₀-alkylthio, C₆-C₂₄-arylthio, C₁-C₂₀-alkylsulphonyl, C₁-C₂₀-alkylsulphonate, C₆-C₂₄-arylsulphonate or C₁-C₂₀-alkylsulphinyl.

7. Process according to Claim 1, wherein a catalyst of the formula (VI), (VII), (VIII), (IX), (X), (XI), (XII) and (XIII), where Mes is in each case a 2,4,6-trimethylphenyl radical is used.

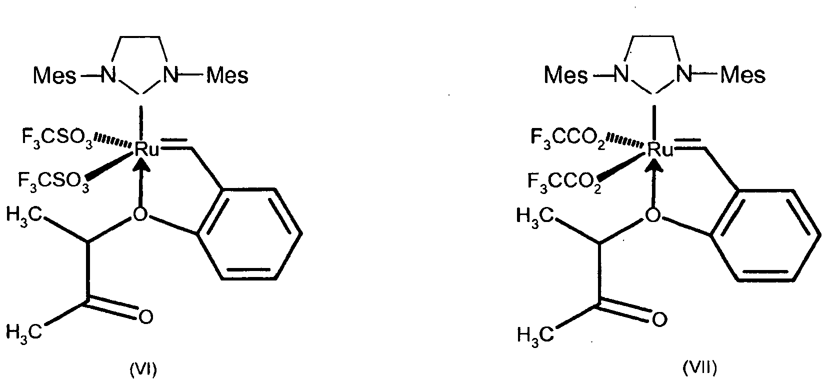

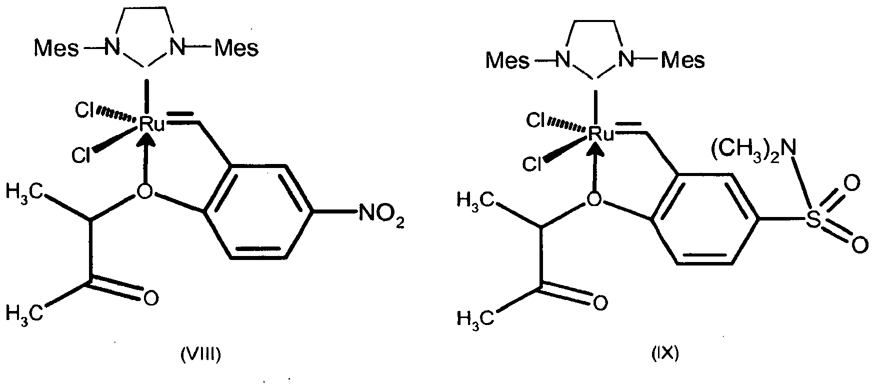

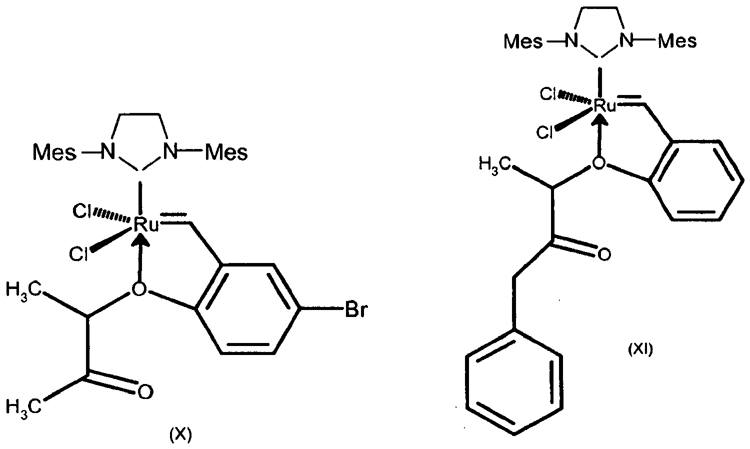

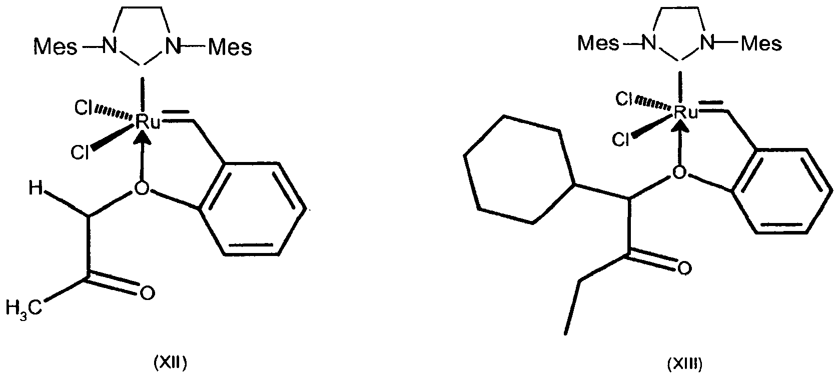

8. Process according to Claim 1, wherein the process is carried out in the presence of a catalyst of the general formula (XIV), 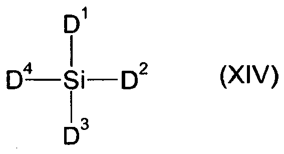
where D¹, D², D³ and D⁴ each have a structure of the general formula (XV) which is bound via the methylene group to the silicon of the formula (XIV), 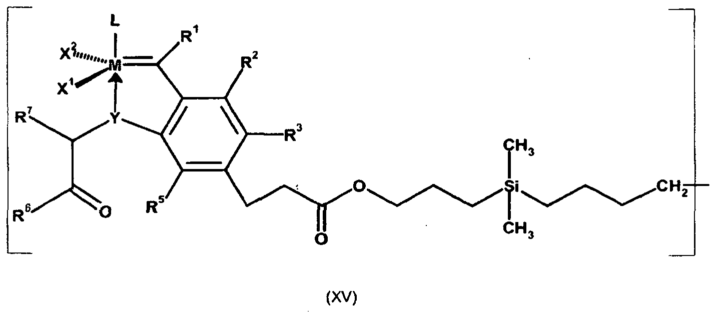
where
M, L, X¹, X² , R¹, R², R³, R³, R⁶ and R⁷ have the meanings given for the general formula (I) in Claim 1.

9. Process according to any one of Claims 1 to 8, wherein the amount of catalyst used is from 1 to 1000 ppm of noble metal, preferably from 5 to 500 ppm, in particular from 5 to 250 ppm, based on the nitrile rubber used.

10. Process according to any one of Claims 1 to 9, wherein the nitrile rubbers used have a Mooney viscosity (ML 1+4 at 100°C) in the range from 24 to 70, preferably from 30 to 50.

11. Process according to any one of claims 1 to 10, wherein the metathesized nitrile rubber is subsequently hydrogenated.

12. A catalyst of formula(Ia) or (Ib) 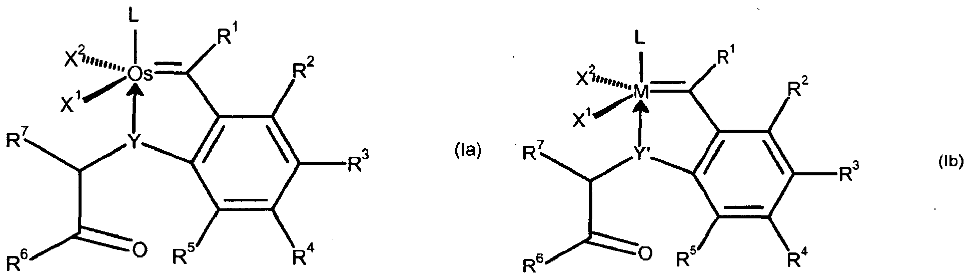 where
M in formula (Ib) is ruthenium or osmium,
Y in formula (Ia) is oxygen (O), sulphur (S), an N radical or a P radical,
Y' in formula (Ib) is sulphur (S), an N radical or a P radical,
X¹ and X² are identical or different ligands,
R¹ is hydrogen or an alkyl, alkenyl, alkynyl or aryl radical
R², R³, R⁴ R⁵ are identical or different and are each hydrogen, organic or inorganic radicals,
R⁶ is an alkyl, cycloalkyl, alkenyl, alkynyl, aryl, alkoxy, alkenyloxy, alkynyloxy, aryloxy, alkoxycarbonyl, alkylamino, alkylthio, arylthio, alkylsulphonyl or alkylsulphinyl radical, each of which may optionally be substituted by one or more alkyl, halogen, alkoxy, aryl or heteroaryl radicals,
R⁷ is hydrogen or an alkyl, cycloalkyl, alkenyl, alkynyl, aryl, alkoxy, alkenyloxy, alkynyloxy, aryloxy, alkoxycarbonyl, alkylamino, alkylthio, arylthio, alkylsulphonyl or alkylsulphinyl radical, each of which may optionally be substituted by one or more alkyl, halogen, alkoxy, aryl or heteroaryl radicals, and
L is a ligand.

13. The catalyst according to Claim 12, wherein L in the general formula (Ia) and the general formula (Ib) is a P(X³)₃ radical, where the radicals X³ are each, independently of one another, C₁-C₆-alkyl, C₃-C₈-cycloalkyl or aryl or L is a substituted or unsubstituted imidazolidine radical ("Im").

14. The catalyst according to any of Claims 12 or 13, having the general formula (Iaa) 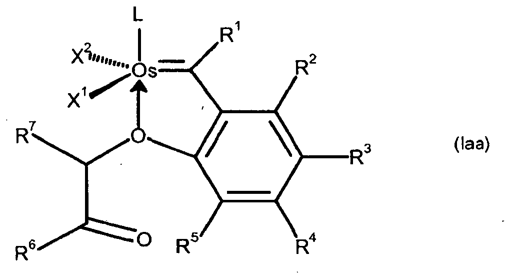 where
X¹ and X² are identical or different ligands,
R¹ is hydrogen or an alkyl, alkenyl, alkynyl or aryl radical
R², R³, R⁴, R⁵ are identical or different and are each hydrogen, organic or inorganic radicals,
R⁶ is an alkyl, cycloalkyl, alkenyl, alkynyl, aryl, alkoxy, alkenyloxy, alkynyloxy, aryloxy, alkoxycarbonyl, alkylamino, alkylthio, arylthio, alkylsulphonyl or alkylsulphinyl radical, each of which may optionally be substituted by one or more alkyl, halogen, alkoxy, aryl or heteroaryl radicals,
R⁷ is hydrogen or an alkyl, cycloalkyl, alkenyl, alkynyl, aryl, alkoxy, alkenyloxy, alkynyloxy, aryloxy, alkoxycarbonyl, alkylamino, alkylthio, arylthio, alkylsulphonyl or alkylsulphinyl radical, each of which may optionally be substituted by one or more alkyl, halogen, alkoxy, aryl or heteroaryl radicals, and
L is a ligand.

15. Use of a catalyst as defined in any one of claims 1 to 8 or of a catalyst as defined in any one of claims 12 to 14 for the metathesis of nitrile rubbers.

## Patentansprüche

1. Verfahren zur Metathese von Nitrilkautschuk in Gegenwart mindestens eines Katalysators der allgemeinen Formel (I) 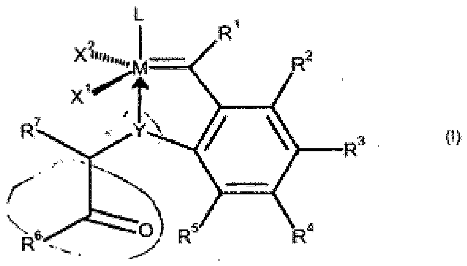 wobei
M Ruthenium oder Osmium bedeutet,
Y Sauerstoff (O), Schwefel (S), einen N-Rest oder einen P-Rest bedeutet,
X¹ und X² gleiche oder verschiedene Liganden bedeuten,
R¹ Wasserstoff oder einen Alkyl-, Alkenyl-, Alkinyl- oder Arylrest darstellt,
R², R³, R⁴, R⁵ gleich oder verschieden sind und jeweils Wasserstoff, organische oder anorganische Reste darstellen,
R⁶ einen Alkyl-, Cycloalkyl-, Alkenyl-, Alkinyl-, Aryl-, Alkoxy-, Alkenyloxy-, Alkinyloxy-, Aryloxy-, Alkoxycarbonyl-, Alkylamino-, Alkylthio-, Arylthio-, Alkylsulfonyl- oder Alkylsulfinylrest darstellt, wobei diese Reste alle gegebenenfalls durch einen oder mehrere Alkyl-, Halogen-, Alkoxy-, Aryl- oder Heteroarylreste substituiert sein können,
R⁷ Wasserstoff oder einen Alkyl-, Cycloalkyl-, Alkenyl-, Alkinyl-, Aryl-, Alkoxy-, Alkenyloxy-, Alkinyloxy-, Aryloxy-, Alkoxycarbonyl-, Alkylamino-, Alkylthio-, Arylthio-, Alkylsulfonyl- oder Alkylsulfinylrest darstellt, wobei diese Reste alle gegebenenfalls durch einen oder mehrere Alkyl-, Halogen-, Alkoxy-, Aryl- oder Heteroarylreste substituiert sein können, und
L einen Liganden darstellt.

2. Verfahren nach Anspruch 1, wobei L in der allgemeinen Formel (I) einen P(X³)₃-Rest darstellt, wobei die Reste X³ jeweils unabhängig voneinander C₁-C₆-Alkyl, C₃-C₈-Cycloalkyl oder Aryl bedeuten, oder L einen substituierten oder unsubstituierten Imidazolidinrest ("Im") darstellt.

3. Verfahren nach Anspruch 2, wobei der Imidazolidinrest (Im) eine Struktur der allgemeinen Formel (IIa) oder (IIb) aufweist: 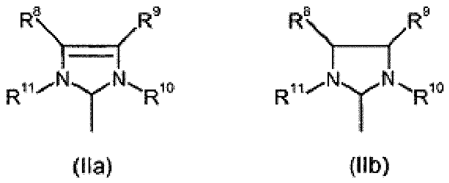 wobei
R⁸, R⁹, R¹⁰ und R¹¹ gleich oder verschieden sind und jeweils Wasserstoff, geradkettiges oder verzweigtes C₁-C₃₀-Alkyl, C₃-C₂₀-Cycloalkyl, C₂-C₂₀-Alkenyl, C₂-C₂₀-Alkinyl, C₆-C₂₄-Aryl, C₁-C₂₀-Carboxylat, C₁-C₂₀-Alkoxy, C₂-C₂₀-Alkenyloxy, C₂-C₂₀-Alkinyloxy, C₆-C₂₀-Aryloxy, C₂-C₂₀-Alkoxycarbonyl, C₁-C₂₀-Alkylthio, C₆-C₂₀-Arylthio, C₁-C₂₀-Alkylsulfonyl, C₁-C₂₀-Alkylsulfonat, C₆-C₂₀-Arylsulfonat oder C₁-C₂₀-Alkylsulfinyl bedeuten.

4. Verfahren nach Anspruch 3, wobei der Imidazolidinrest (Im) die Struktur (IIIa), (IIIb), (IIIc), (IIId), (IIIe) oder (IIIf) aufweist: 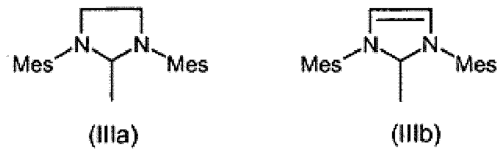 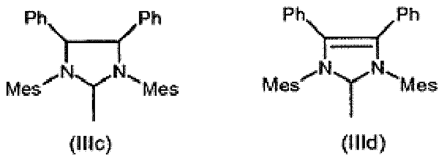 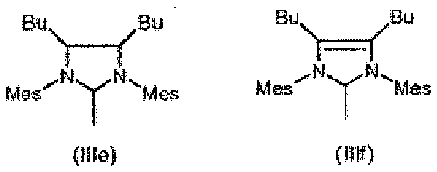
wobei Mes jeweils für einen 2,4,6-Trimethylphenylrest steht.

5. Verfahren nach Anspruch 1, wobei das Verfahren in Gegenwart eines Katalysators der allgemeinen Formel (IV) 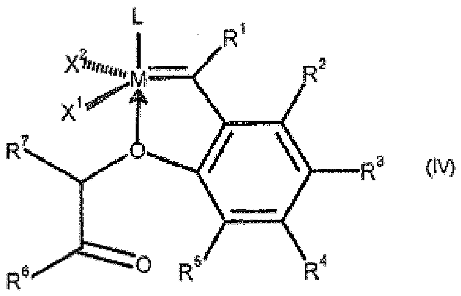 wobei
M, L, X¹, X², R¹, R², R³, R⁴, R⁵, R⁶, R⁷ die für die allgemeine Formel (I) in Anspruch 1 angegebenen Bedeutungen besitzen,
durchgeführt wird.

6. Verfahren nach Anspruch 5, wobei in der allgemeinen Formel (IV)
M Ruthenium bedeutet,
X¹ und X² beide Chlor bedeuten,
R¹ Wasserstoff darstellt,
R², R³, R⁴ und R⁵ alle Wasserstoff darstellen,
R⁶ Methyl bedeutet,
R⁷ Methyl bedeutet und
L einen substituierten oder unsubstituierten Imidazolidinrest der Formel (IIa) oder (IIb) darstellt, 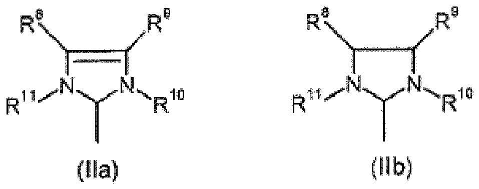
wobei
R⁸, R⁹, R¹⁰, R¹¹ gleich oder verschieden sind und jeweils Wasserstoff, geradkettiges oder verzweigtes C₁-C₃₀-Alkyl, C₃-C₂₀-Cylcoalkyl, C₂-C₂₀-Alkenyl, C₂-C₂₀-Alkinyl, C₆-C₂₄-Aryl, C₁-C₂₀-Carboxylat, C₁-C₂₀-Alkoxy, C₂-C₂₀-Alkenyloxy, C₂-C₂₀-Alkinyloxy, C₆-C₂₄-Aryloxy, C₂-C₂₀-Alkoxycarbonyl, C₁-C₂₀-Alkylthio, C₆-C₂₄-Arylthio, C₁-C₂₀-Alkylsulfonyl, C₁-C₂₀-Alkylsulfonat, C₆-C₂₄-Arylsulfonat oder C₁-C₂₀-Alkylsulfinyl bedeuten.

7. Verfahren nach Anspruch 1, wobei ein Katalysator der Formel (VI), (VII), (VIII), (IX), (X), (XI), (XII) und (XIII) verwendet wird, wobei Mes jeweils für einen 2,4,6-Trimethylphenylrest steht:

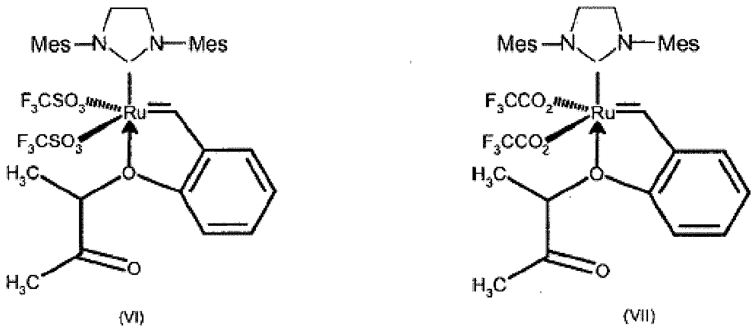

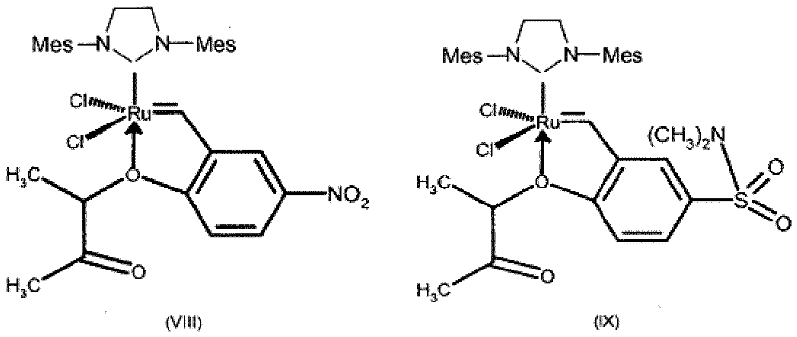

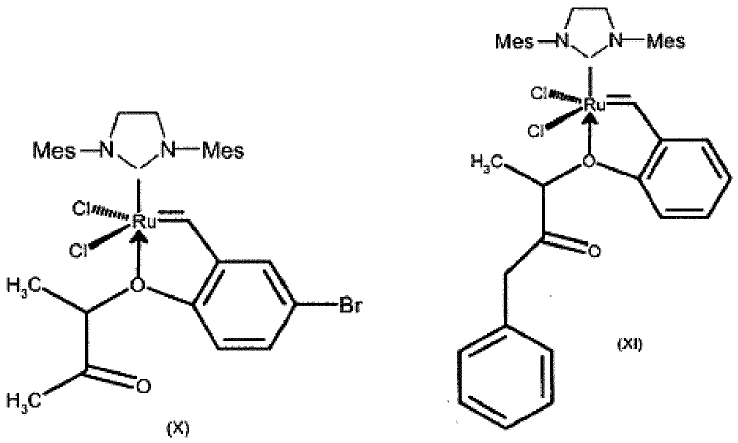

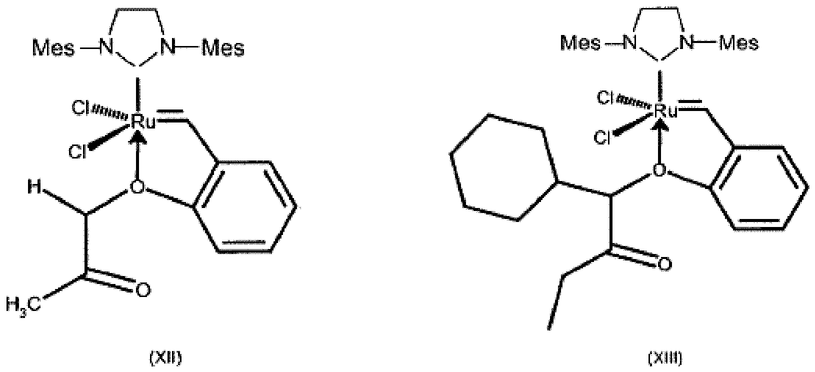

8. Verfahren nach Anspruch 1, wobei das Verfahren in Gegenwart eines Katalysators der allgemeinen Formel (XIV), 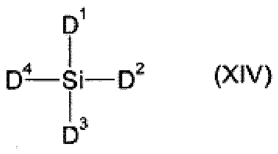 wobei
D¹, D², D³ und D⁴ jeweils eine Struktur der allgemeinen Formel (XV) aufweisen, die über die Methylengruppe an das Silicium der Formel (XIV) gebunden ist, 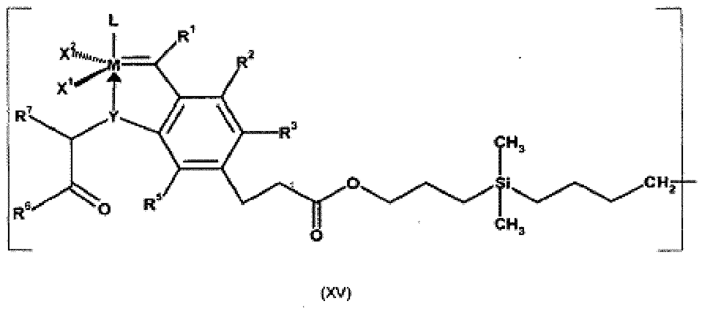
wobei
M, L, X¹, X², R¹, R², R³, R⁵, R⁶ und R⁷ die für die allgemeine Formel (I) in Anspruch 1 angegebenen Bedeutungen besitzen,
durchgeführt wird.

9. Verfahren nach einem der Ansprüche 1 bis 8, wobei die verwendete Katalysatormenge 1 bis 1000 ppm Edelmetall, vorzugsweise 5 bis 500 ppm, insbesondere 5 bis 250 ppm, bezogen auf den verwendeten Nitrilkautschuk, beträgt.

10. Verfahren nach einem der Ansprüche 1 bis 9, wobei die verwendeten Nitrilkautschuke eine Mooney-Viskosität (ML 1+4 4 bei 100°C) im Bereich von 24 bis 70, vorzugsweise von 30 bis 50, aufweisen.

11. Verfahren nach einem der Ansprüche 1 bis 10, wobei der metathesierte Nitrilkautschuk anschließend hydriert wird.

12. Katalysator der Formel (Ia) oder (Ib) 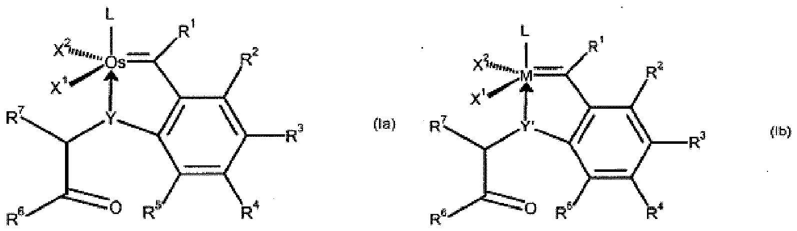 wobei
M in Formel (Ib) Ruthenium oder Osmium bedeutet,
Y in Formel (Ia) Sauerstoff (O), Schwefel (S), einen N-Rest oder einen P-Rest bedeutet
Y in Formel (Ib) Schwefel (S), einen N-Rest oder einen P-Rest bedeutet,
X¹ und X² gleiche oder verschiedene Liganden bedeuten,
R¹ Wasserstoff oder einen Alkyl-, Alkenyl-, Alkinyl- oder Arylrest darstellt,
R², R³, R⁴, R⁵ gleich oder verschieden sind und jeweils Wasserstoff, organische oder anorganische Reste darstellen,
R⁶ einen Alkyl-, Cycloalkyl-, Alkenyl-, Alkinyl-, Aryl-, Alkoxy-, Alkenyloxy-, Alkinyloxy-, Aryloxy-, Alkoxycarbonyl-, Alkylamino-, Alkylthio-, Arylthio-, Alkylsulfonyl- oder Alkylsulfinylrest darstellt, wobei diese Reste alle gegebenenfalls durch einen oder mehrere Alkyl-, Halogen-, Alkoxy-, Aryl- oder Heteroarylreste substituiert sein können,
R⁷ Wasserstoff oder einen Alkyl-, Cycloalkyl-, Alkenyl-, Alkinyl-, Aryl-, Alkoxy-, Alkenyloxy-, Alkinyloxy-, Aryloxy-, Alkoxycarbonyl-, Alkylamino-, Alkylthio-, Arylthio-, Alkylsulfonyl- oder Alkylsulfinylrest darstellt, wobei diese Reste alle gegebenenfalls durch einen oder mehrere Alkyl-, Halogen-, Alkoxy-, Aryl- oder Heteroarylreste substituiert sein können, und
L einen Liganden darstellt.

13. Katalysator nach Anspruch 12, wobei L in der allgemeinen Formel (Ia) und der allgemeinen Formel (Ib) einen P(X³)₃-Rest darstellt, wobei die Reste X³ jeweils unabhängig voneinander C₁-C₆-Alkyl, C₃-C₈-Cycloalkyl oder Aryl bedeuten, oder L einen substituierten oder unsubstituierten Imidazolidinrest ("Im") darstellt.

14. Katalysator nach einem der Ansprüche 12 oder 13 mit der allgemeinen Formel (Iaa) 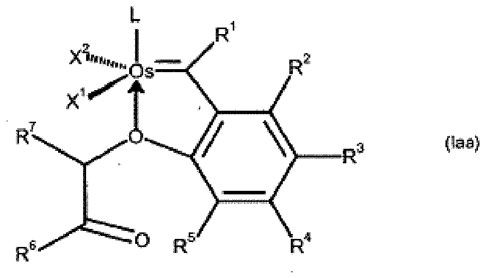 wobei
X¹ und X² gleiche oder verschiedene Liganden bedeuten,
R¹ Wasserstoff oder einen Alkyl-, Alkenyl-, Alkinyl- oder Arylrest darstellt,
R², R³, R⁴, R⁵ gleich oder verschieden sind und jeweils Wasserstoff, organische oder anorganische Reste darstellen,
R⁶ einen Alkyl-, Cycloalkyl-, Alkenyl-, Alkinyl-, Aryl-, Alkoxy-, Alkenyloxy-, Alkinyloxy-, Aryloxy-, Alkoxycarbonyl-, Alkylamino-, Alkylthio-, Arylthio-, Alkylsulfonyl- oder Alkylsulfinylrest darstellt, wobei diese Reste alle gegebenenfalls durch einen oder mehrere Alkyl-, Halogen-, Alkoxy-, Aryl- oder Heteroarylreste substituiert sein können,
R⁷ Wasserstoff oder einen Alkyl-, Cycloalkyl-, Alkenyl-, Alkinyl-, Aryl-, Alkoxy-, Alkenyloxy-, Alkinyloxy-, Aryloxy-, Alkoxycarbonyl-, Alkylamino-, Alkylthio-, Arylthio-, Alkylsulfonyl- oder Alkylsulfinylrest darstellt, wobei diese Reste alle gegebenenfalls durch einen oder mehrere Alkyl-, Halogen-, Alkoxy-, Aryl- oder Heteroarylreste substituiert sein können, und
L einen Liganden darstellt.

15. Verwendung eines Katalysators gemäß einem der Ansprüche 1 bis 8 oder eines Katalysators gemäß einem der Ansprüche 12 bis 14 zur Metathese von Nitrilkautschuken.

## Revendications

1. Procédé de métathèse de caoutchoucs nitrile en présence d'au moins un catalyseur de formule générale (I) 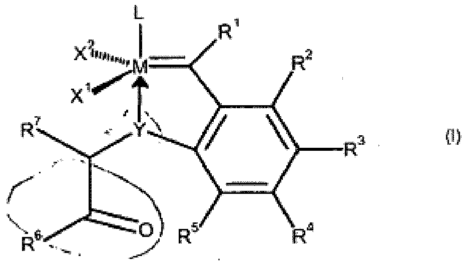 dans laquelle
M est le ruthénium ou l'osmium,
Y est l'oxygène (O), le soufre (S), un radical N ou un radical P,
X¹ et X² sont des ligands identiques ou différents,
R¹ est un atome d'hydrogène ou un radical alkyle, alcényle, alcynyle ou aryle
R², R³, R⁴, R⁵ sont identiques ou différents et sont chacun un atome d'hydrogène, des radicaux organiques ou inorganiques,
R⁶ est un radical alkyle, cycloalkyle, alcényle, alcynyle, aryle, alcoxy, alcényloxy, alcynyloxy, aryloxy, alcoxycarbonyle, alkylamino, alkylthio, arylthio, alkylsulfonyle ou alkylsulfinyle, chacun d'eux pouvant éventuellement être substitué par un ou plusieurs radicaux alkyle, halogéno, alcoxy, aryle ou hétéroaryle,
R⁷ est un atome d'hydrogène ou un radical alkyle, cycloalkyle, alcényle, alcynyle, aryle, alcoxy, alcényloxy, alcynyloxy, aryloxy, alcoxycarbonyle, alkylamino, alkylthio, arylthio, alkylsulfonyle ou alkylsulfinyle, chacun d'eux pouvant éventuellement être substitué par un ou plusieurs radicaux alkyle, halogéno, alcoxy, aryle ou hétéroaryle, et
L est un ligand.

2. Procédé selon la revendication 1, dans lequel L, dans la formule générale (I) est un radical P(X³)₃, dans lequel les radicaux X³ sont chacun, indépendamment les uns des autres, un radical alkyle en C₁-C₆, cycloalkyle en C₃-C₈ ou aryle ou L est un radical imidazolidine («Im») substitué ou non substitué.

3. Procédé selon la revendication 2, dans lequel le radical imidazolidine (Im) possède une structure de formule générale (IIa) ou (IIb), 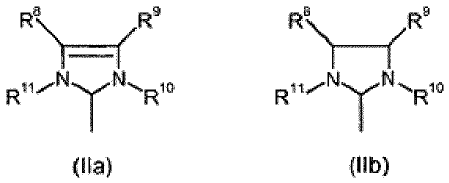 dans laquelle
R⁸, R⁹, R¹⁰, R¹¹ sont identiques ou différents et sont chacun un atome d'hydrogène, ou un groupe alkyle en C₁-C₃₀ à chaîne linéaire ou ramifié, cycloalkyle en C₃-C₂₀, alcényle en C₂-C₂₀, alcynyle en C₂-C₂₀, aryle en C₆-C₂₄, carboxylate en C₁-C₂₀, alcoxy en C₁-C₂₀, alcényloxy en C₂-C₂₀, alcynyloxy en C₂-C₂₀, aryloxy en C₆-C₂₀, alcoxycarbonyle en C₂-C₂₀, alkylthio en C₁-C₂₀, arylthio en C₆-C₂₀, alkylsulfonyle en C₁-C₂₀, alkylsulfonate en C₁-C₂₀, arylsulfonate en C₆-C₂₀ ou alkylsulfinyle en C₁-C₂₀.

4. Procédé selon la revendication 3, dans lequel le radical imidazolidine (Im) possède la structure (IIIa), (IIIb), (IIIc), (IIId), (IIIe) ou (IIIf), 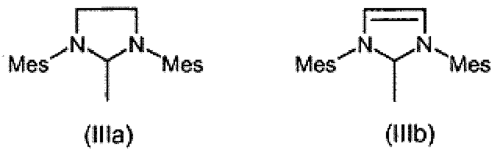 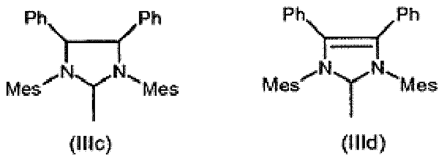 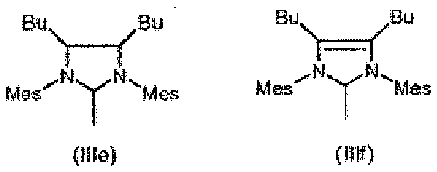
dans laquelle Mes est dans chaque cas un radical 2,4,6-triméthylphényle.

5. Procédé selon la revendication 1, dans lequel le procédé est réalisé en présence d'un catalyseur de formule générale (IV) 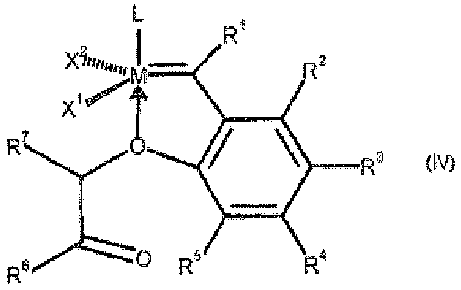 dans laquelle
M, L, X¹, X², R¹, R², R³, R⁴, R⁵, R⁶, R⁷ ont les significations données pour la formule générale (I) dans la revendication 1.

6. Procédé selon la revendication 5, dans lequel, dans la formule générale (IV),
M est le ruthénium,
X¹ et X² sont tous deux des atomes de chlore,
R¹ est un atome d'hydrogène,
R², R³, R⁴, R⁵ sont tous des atomes d'hydrogène,
R⁶ est un groupe méthyle,
R⁷ est un groupe méthyle et
L est un radical imidazolidine substitué ou non substitué de formule (IIa) ou (IIb), 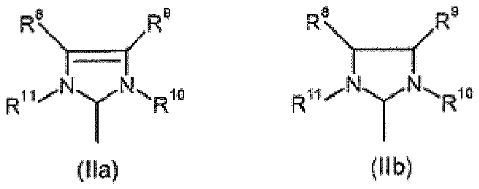
formules dans lesquelles
R⁸, R⁹, R¹⁰, R¹¹ sont identiques ou différents et sont chacun un atome d'hydrogène, ou un groupe alkyle en C₁-C₃₀ à chaîne linéaire ou ramifié, cycloalkyle en C₃-C₂₀, alcényle en C₂-C₂₀, alcynyle en C₂-C₂₀, aryle en C₆-C₂₄, carboxylate en C₁-C₂₀, alcoxy en C₁-C₂₀, alcényloxy en C₂-C₂₀, alcynyloxy en C₂-C₂₀, aryloxy en C₆-C₂₄, alcoxycarbonyle en C₂-C₂₀, alkylthio en C₁-C₂₀, arylthio en C₆-C₂₄, alkylsulfonyle en C₁-C₂₀, alkylsulfonate en C₁-C₂₀, arylsulfonate en C₆-C₂₄ ou alkylsulfinyle en C₁-C₂₀.

7. Procédé selon la revendication 1, dans lequel un catalyseur de formule (VI), (VII), (VIII), (IX), (X), (XI), (XII) et (XIII), où Mes est dans chaque cas un radical 2,4,6-triméthylphényle, est utilisé.

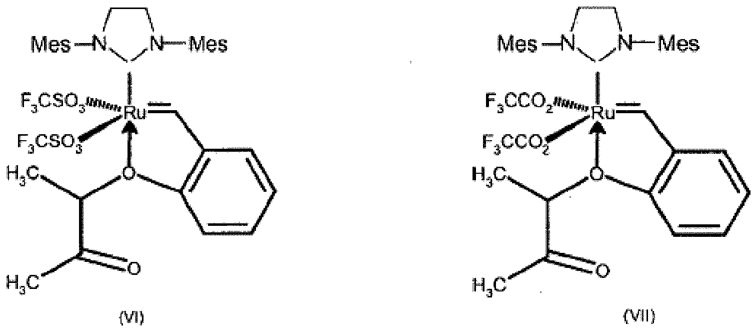

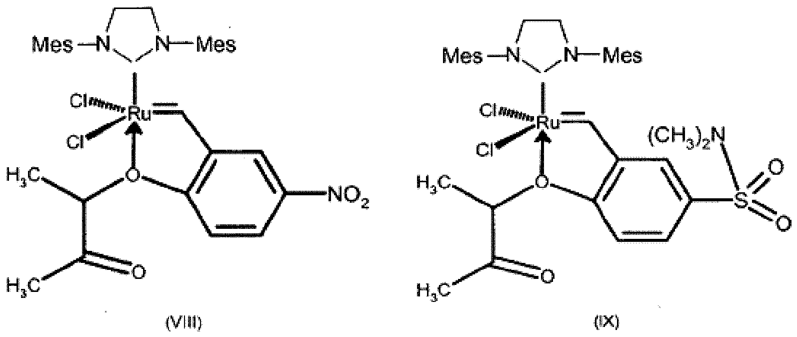

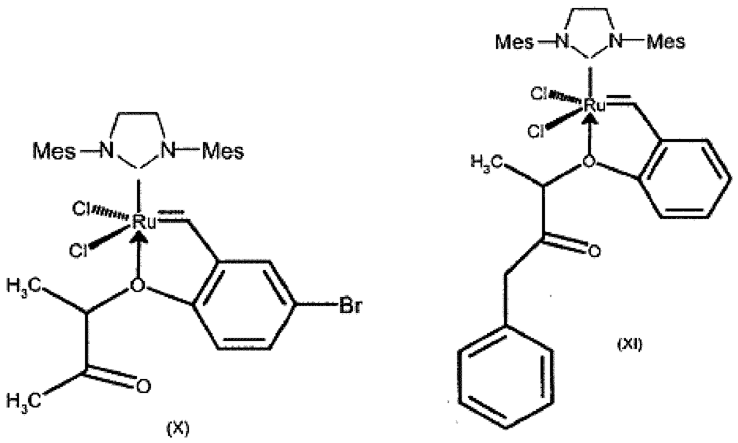

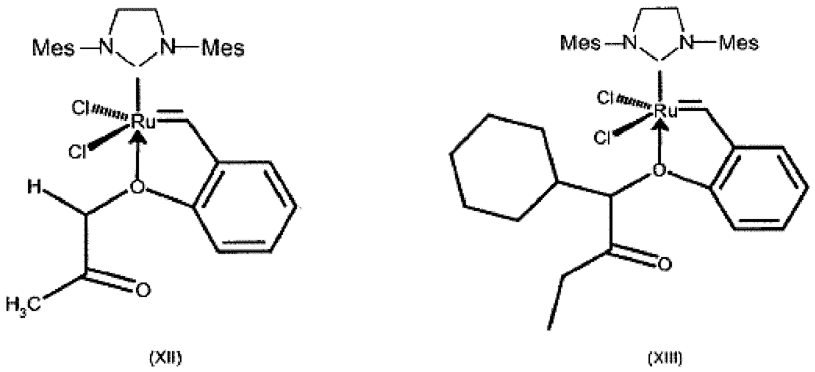

8. Procédé selon la revendication 1, dans lequel le procédé est réalisé en présence d'un catalyseur de formule générale (XIV), 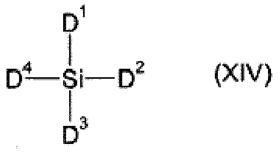
dans laquelle D¹, D², D³ et D⁴ possèdent chacun une structure de formule générale (XV) qui est liée via le groupe méthylène à l'atome de silicium de la formule (XIV), 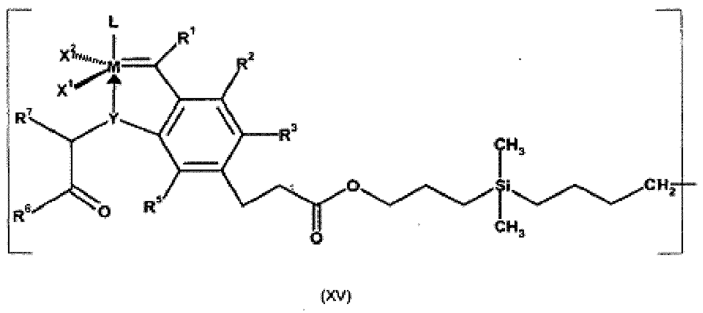
dans laquelle
M, L, X , X², R¹, R², R³, R⁵, R⁶ et R⁷ ont les significations données pour la formule générale (I) dans la revendication 1.

9. Procédé selon l'une quelconque des revendications 1 à 8, dans lequel la quantité de catalyseur utilisée est de 1 à 1000 ppm de métal noble, de préférence de 5 à 500 ppm, en particulier de 5 à 250 ppm, par rapport au caoutchouc nitrile utilisé.

10. Procédé selon l'une quelconque des revendications 1 à 9, dans lequel les caoutchoucs nitrile utilisés possèdent une viscosité Mooney (ML 1+4 à 100°C) dans la fourchette de 24 à 70, de préférence de 30 à 50.

11. Procédé selon l'une quelconque des revendications 1 à 10, dans lequel le caoutchouc nitrile ayant subi une métathèse est ensuite hydrogéné.

12. Catalyseur de formule (Ia) ou (Ib) 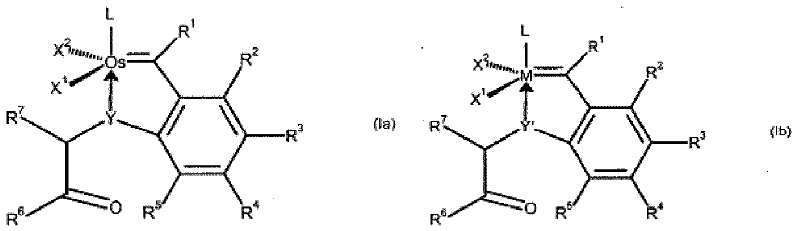 dans lequel
M dans la formule (Ib) est le ruthénium ou l'osmium,
Y dans la formule (Ia) est l'oxygène (O), le soufre (S), un radical N ou un radical P,
Y' dans la formule (Ib) est le soufre (S), un radical N ou un radical P,
X¹ et X² sont des ligands identiques ou différents,
R¹ est un atome d'hydrogène ou un radical alkyle, alcényle, alcynyle ou aryle,
R², R³, R⁴, R⁵ sont identiques ou différents et sont chacun un atome d'hydrogène, des radicaux organiques ou inorganiques,
R⁶ est un radical alkyle, cycloalkyle, alcényle, alcynyle, aryle, alcoxy, alcényloxy, alcynyloxy, aryloxy, alcoxycarbonyle, alkylamino, alkylthio, arylthio, alkylsulfonyle ou alkylsulfinyle, chacun d'eux pouvant éventuellement être substitué par un ou plusieurs radicaux alkyle, halogéno, alcoxy, aryle ou hétéroaryle,
R⁷ est un atome d'hydrogène ou un radical alkyle, cycloalkyle, alcényle, alcynyle, aryle, alcoxy, alcényloxy, alcynyloxy, aryloxy, alcoxycarbonyle, alkylamino, alkylthio, arylthio, alkylsulfonyle ou alkylsulfinyle, chacun d'eux pouvant éventuellement être substitué par un ou plusieurs radicaux alkyle, halogéno, alcoxy, aryle ou hétéroaryle, et
L est un ligand.

13. Catalyseur selon la revendication 12, dans lequel L, dans la formule générale (Ia) et la formule générale (Ib), est un radical P(X³)₃, dans lequel les radicaux X³ sont chacun, indépendamment les uns des autres, un radical alkyle en C₁-C₆, cycloalkyle en C₃-C₈ ou aryle ou L est un radical imidazolidine («Im») substitué ou non substitué.

14. Catalyseur selon l'une quelconque des revendications 12 ou 13, répondant à la formule générale (Iaa) 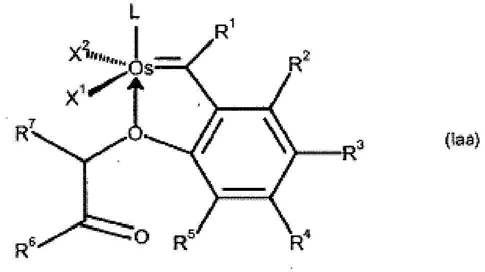 dans laquelle
X¹ et X² sont des ligands identiques ou différents,
R¹ est un atome d'hydrogène ou un radical alkyle, alcényle, alcynyle ou aryle,
R², R³, R⁴, R⁵ sont identiques ou différents et sont chacun un atome d'hydrogène, des radicaux organiques ou inorganiques,
R⁶ est un radical alkyle, cycloalkyle, alcényle, alcynyle, aryle, alcoxy, alcényloxy, alcynyloxy, aryloxy, alcoxycarbonyle, alkylamino, alkylthio, arylthio, alkylsulfonyle ou alkylsulfinyle, chacun d'eux pouvant éventuellement être substitué par un ou plusieurs radicaux alkyle, halogéno, alcoxy, aryle ou hétéroaryle,
R⁷ est un atome d'hydrogène ou un radical alkyle, cycloalkyle, alcényle, alcynyle, aryle, alcoxy, alcényloxy, alcynyloxy, aryloxy, alcoxycarbonyle, alkylamino, alkylthio, arylthio, alkylsulfonyle ou alkylsulfinyle, chacun d'eux pouvant éventuellement être substitué par un ou plusieurs radicaux alkyle, halogéno, alcoxy, aryle ou hétéroaryle, et
L est un ligand.

15. Utilisation d'un catalyseur tel que défini dans l'une quelconque des revendications 1 à 8 ou d'un catalyseur tel que défini dans l'une quelconque des revendications 12 à 14 pour la métathèse de caoutchoucs nitrile.
